# EUROPEAN PATENT APPLICATION

(11) **EP 4 686 413 A1**
(43) Date of publication of application: **04.02.2026**
(21) Application number: 24192073.5
(22) Date of filing: 31.07.2024
(51) Int. Cl.: A23G 1/00, A23G 1/10, A23G 1/20, A23G 1/54

(54) **METHOD FOR PRODUCING A FOOD PREPARATION COMPRISING FOOD CHUNKS**

(71) Applicant: Agrana Beteiligungs- Aktiengesellschaft, 1020 Wien (AT)
(72) Inventor: REISINGER, Michael, 1020 Wien (AT); ALEXANDER, Dimo, 1020 Wien (AT); WASTYN, Marnik Michel, 2320 Schwechat (AT)
(74) Representative: SONN Patentanwälte GmbH & Co KG

(57) **Abstract**

The present invention relates to a method for producing a food preparation comprising food chunks having a fat content of at least 30 % (w/w), preferably chocolate chunks, the method comprising the steps
(a) providing a food preparation at a temperature T1, wherein T1 is above the freezing point of the food preparation or at most 15°C, preferably at most 10°C, especially at most 5°C, under the freezing point of the food preparation in case half-frozen preparations,
(b) providing a molten fat composition suitable for foodstuffs with a fat content of at least 30 % (w/w) with a melting point of above T1 and adding the molten fat composition to the food preparation under stirring with a first rotation speed 51,

whereupon the fat composition solidifies at least partially,
(c1) stirring with a second rotation speed S2 higher than 51 to form chunks from the at least partially solidified fat composition, or
(c2) in case 51 is 4 rpm or above, preferably 10 rpm or above, especially 15 rpm or above, a second rotation speed S2 equal or higher than 51 to form chunks from the at least partially solidified fat composition, and
(d) completing the food preparation comprising chunks of the fat composition.

## Description

The present invention relates to a method and a device for producing a food preparation comprising food chunks, especially chocolate chunks. The present invention further relates to a food preparation comprising food chunks, especially chocolate chunks and its use in the food industry.

Food preparations, such as yogurts or ice cream, which comprise food inclusions, such as chocolate particles, are commonly known in the art. For example, WO 00/70960 A1 concerns a food product comprising a substantially solid mass based on chocolate in contact with a wet medium in non-frozen state with a local free moisture content of from 45 to 88%, such as a dairy base, wherein the crunchiness of the chocolate is retained. CN 101703107 A relates to the production of a probiotic yogurt containing chocolate particles. Sterilized chocolate is kept at 25 to 35 °C and poured into the yogurt which is kept below 10 °C, such that the chocolate solidifies. Subsequently, the chocolate is cut into particles, for example with a stirring device with blades. CN 111096365 A discloses adding fruit particles and aseptic chocolate particles to a jam. CN 112450276 A relates to a method to prepare cherry black forest cake flavored yogurt, which method comprises adding liquid chocolate and chocolate strands to the yogurt. In the method disclosed in CN 102499283 A, a mixture comprising milk is sterilized, fermented and subsequently cooled to a temperature of 12 to 15 °C. Dark chocolate pulp is added while stirring, such that the chocolate solidifies and granular chocolate is formed.

Several publications disclose rapidly adding molten chocolate to a food preparation, for example via injection. In some disclosures, a stream of molten chocolate is injected into a stream of a dairy product. For example, in the method of US 2004/0013769 A1, US 2006/0165844 A1 and WO 2004/008867 A1, a cold, fermented yogurt base with a temperature of from 0 to 5 °C is provided to which a molten chocolate is rapidly added, e.g. by injecting it into a stream of the yogurt base. When contacted with the yogurt base, the molten chocolate cools down and is shattered into particulates.

Similarly, according to the method of WO 2006/046139 A1 and WO 2006/046151 A1, a molten, pasteurized chocolate with a fat content of between 46 and 85 wt% is injected into a cooled stream of pasteurized acidic milk base, whereupon it solidifies and can be cut into pieces.

EP 0 221 757 A2 describes ejecting chocolate at high speed towards an ice cream stream, such that the chocolate collides against the outer peripheral surface of said ice cream stream and enters it, and thin, strip-like chocolate layers are formed in the ice cream stream.

In WO 2006/046147 A1, pasteurized or sterilized, molten chocolate is injected into a stream of a pasteurized or sterilized, sweetened aqueous preparation whereupon the chocolate solidifies and can be cut and mixed with the preparation.

In the method of EP 1290 950 A1, a stream of molten chocolate is injected into a stream of a cooled dessert composition. When the chocolate enters the stream of the dessert composition, the chocolate cools down rapidly and solidifies at least partially into a strand. The formed mixture is then fed to a mixing device wherein the chocolate strand is divided into particles which are dispersed throughout the dessert material.

US 2,190,226 A discloses a method and an apparatus for introducing molten chocolate into an ice cream. The apparatus comprises two converging ducts through which ice cream streams are guided to a mixing chamber. Molten chocolate is discharged via a channel at the converging point of the ice cream streams. Upon contact with the ice cream, the chocolate cools down and is broken into a multitude of particles.

In other disclosures, a stream of molten chocolate is injected directly into the food preparation. For example, in WO 2004/089099 A2, a pasteurized, molten chocolate is injected into an aseptically processed, cooled yogurt, such that the chocolate solidifies and forms particulates.

With the methods known from the state of art, food preparations comprising inclusions of fatty food chunks, especially chocolate inclusions, with a rather uniform shape and thickness can be formed, such as splits or flakes of such fatty food chunks, for example chocolate splits or chocolate flakes.

There is a need for a method to produce food preparations with inclusions of fatty food chunks, especially with chocolate inclusions, having an irregular shape. It is therefore an object of the present invention to provide a method meeting this need. Moreover, there is also a need to produce particles of edible food chunks of fatty nature (especially chocolate particles) and food preparations comprising such particles in an aseptic way, preferably by using standard pasteurization equipment readily available in general food technology.

Therefore, the present invention is directed to a method for producing a food preparation comprising food chunks having a fat content of at least 30 % (w/w), preferably chocolate chunks, the method comprising the steps
(a) providing a food preparation at a temperature T1, wherein T1 is above the freezing point of the food preparation or at most 15°C, preferably at most 10°C, especially at most 5°C, under the freezing point of the food preparation in case half-frozen preparations,
(b) providing a molten fat composition suitable for foodstuffs with a fat content of at least 30 % (w/w) with a melting point of above T1 and adding the molten fat composition to the food preparation under stirring with a first rotation speed S1,
whereupon the fat composition solidifies at least partially,
(c1) stirring with a second rotation speed S2 higher than S1 to form chunks from the at least partially solidified fat composition, or
(c2) in case S1 is 4 rpm or above, preferably 10 rpm or above, especially 15 rpm or above, a second rotation speed S2 equal or higher than S1 to form chunks from the at least partially solidified fat composition, and
(d) completing the food preparation comprising chunks of the fat composition.

With the present invention it becomes possible to produce food preparations with fatty inclusions having an irregular shape and to produce particles of edible food chunks of fatty nature (especially these chocolate particles) and food compositions comprising these particles in an aseptic way.

The present invention deals with the provision of fatty particles of irregular shape ("chunks") which can be used in food preparations. Therefore, the fatty particles provided herein are composed of at least 30 % (w/w) of fat, preferably with at least 50 % (w/w) of fat, more preferred at least 70 % (w/w) of fat, especially at least 90 % (w/w) of fat.

A "chunk" according to the present invention is a solid piece of an edible fat composition, i.e. a solidified particle containing at least 30 % (w/w) of fat which is ingestible and can be part of a food composition. Chunks according to the present invention have irregular shape meaning that the particles significantly differ from each other with respect to size and shape, in contrast to regular solid fat particles, such as particles formed from droplets of the fatty material. The irregular nature of the chunks according to the present invention is due to the irregular break of a partly solidified fatty composition formed in step (b) of the method according to the present invention by performing steps (c1) and (c2) of the method according to the present invention. Further breaking of the chunks may occur during cutting and/or sieving, for example if performed in the course of the completing step (d).

The "fat composition suitable for foodstuffs with a fat content of at least 30 % (w/w)" according to the present invention is also referred to as "fatty (food) composition" or "fat composition". The particulate material resulting from the method according to the present invention (due to the irregular break of a partly solidified fatty composition formed in step (b)) is referred to as "fatty (food) chunks" or "fatty (food) flakes". Preferably, the fatty food chunks according to the present invention are chunks made of or comprising chocolate, i.e. "chocolate chunks". The material produced herein is suitable to be consumed as food intended for human consumption and is therefore edible.

Stirring with the first rotation speed S1 during addition of the molten fat composition, especially the molten chocolate, allows for the formation of a fat/chocolate layer and for obtaining a certain level of solidification already before stirring with the higher, second rotation speed S2, whereupon the fat or chocolate layer is broken, and fatty food chunks or chocolate chunks are formed and well dispersed in the preparation. The resulting food preparation comprises irregular fatty food chunks or chocolate chunks varying in size and shape in all three dimensions, and thus have a home-made appearance. Surprisingly, this also results in a superior sensation in taste and texture emerging during consumption of the food preparation, compared to food preparations comprising uniform fatty food flakes or chocolate flakes. As the fatty food chunks or chocolate chunks prepared according to the inventive method are generally comparatively large-sized, they are better perceivable upon consumption and need a longer time to melt, resulting in a more intense fatty or chocolate taste and an excellent crunching.

In step (a), the food preparation is provided at the temperature T1, with T1 being above the freezing point of the food preparation. The process according to the present invention can be applied on a very broad range of viscosities. The preparations obtained in the course of the present invention may show shear thinning characteristics meaning decreasing viscosity under shear stress (e.g. during agitation). However, some preparations can be still very viscous during agitation as for example 6000 mPa.s under moderate stirring. As an extreme case, it could have almost gel-like texture. On the other hand, also rather thin media may be used for the technology according to the present invention, if they have a high density thus the chocolate is not submerged immediately and can at least partially build a film on top. Measuring viscosity according to the present invention is preferably performed in the Modular Compact Rheometer Type MCR 302 (Anton Paar GmbH, Graz, Austria), which is temperature controlled by a Haake K20 and DC5 device (Haake, Karlsruhe, Germany). A plate-plate measuring system (PP50) is used and the data is collected and analyzed with the RheoCompass software. The temperature can be widely adjusted and was set to 20 °C as standard for good comparability, The measurement was started after 2 min of temperature constancy. Exemplary viscosity graphs (viscosity depending on applied shear stress) of typical preparations according to the present invention that were already successfully used for chocolate chunk production are described in the example section. Accordingly, the food preparation preferably has a viscosity of from 1 to 100000 mPa.s at 20 °C, preferably from 100 to 50000 mPa.s, more preferably from 1000 to 20000 mPa.s. As such, the food preparation can be stirred well at the temperature T1.

Preferably, the food preparation is a dairy product and/or a plant-based alternative thereof. The food preparation according to the present invention may typically be a fruit preparation, a brown flavor preparation (coffee, caramel, cocoa etc.), a (flavoured) sugar syrup, a preparation stabilized with one or more food thickening agents such as starches, xanthan, guar gum, locust bean gum, gelatin, pectin, agar-agar, carrageenan, alginate, gellan gum; a dairy product and/or a plant-based alternative thereof, a savory preparation, a relish, a salsa, a pesto, a chutney, a tomato sauce, a sweet or savory dipping sauce, topping or spread, preferably comprising inclusions such as pieces of fruits, cookies, dough, nuts, herbs, cut vegetables, cereals, seeds. This may then be delivered to companies finishing the food product e.g. by mixing it aseptically into their white mass to yield the final stracciatella yoghurt etc. and filled into cups for the consumer. Of course, the present invention could also be directly applied on dairy or plant based white masses. Dairy products (or plant-based alternatives thereof) can be stirred well, often even at a low temperature (e.g. around or below 0 °C) such that they are suitable for use in the inventive method. Furthermore, the formed chocolate chunks can then develop a particularly unique crunchiness. The dairy product is preferably a yoghurt, an ice cream, bakery product and/or a milk shake.

Preferably, the food preparation comprises Stracciatella. For example, the food preparation can be a Stracciatella yoghurt and/or a Stracciatella ice cream. Such a food preparation can be well processed with the present invention, and the resulting Stracciatella preparation comprising chocolate chunks has a home-made appearance exhibiting an outstanding experience in taste, crunchiness and melting behavior.

The food preparation is preferably aseptic. This can help to maintain the sterility of the food preparation throughout its shelf life, such that the food preparation can be safely consumed without the need for refrigeration and/or preservatives. This, in turn, can allow the food preparation, particularly a dairy product, to be stored at room temperature until opened, making it convenient for distribution and reducing the need for cold chain logistics. Preferably, the food preparation is cooked and then aseptically filled into a storage tank.

The described invention is particularly appropriate for the production of aseptic chocolate inclusions. The aseptic processing enables to achieve a certain shelf life of the product without the addition of preservatives. In comparison to already known approaches for the production of aseptic chocolate particles (for example as described in EP 1249487 A1) the present technique demands much less requirements on special equipment, avoids special moveable mechanic parts as far as possible (e.g. no moving cooling belts or drums) and restricts itself to parts already commonly used in aseptic processing such as aseptic stirred vessels, pumps, valves etc.. These parts are easily steam sterilizable and are proven suitable as aseptic containments over decades in food and pharma industry.

In context to the present invention, aseptic processing can be ensured if prior to the formation of the fatty food chunks, especially the chocolate chunks, according to the present invention, the preparation and fat-mixture/chocolate undergo treatments suitable to reduce their microbial loads to the desired level. Prior to the introduction of the cold preparation into the mixing vessel, all line parts (vessel, filling line, connectors, etc.) should be sterilized preferably by steam sterilization and further contamination should be excluded by carefully maintaining all aseptic barriers throughout the whole process.

Exemplarily, the main steps of the aseptic processing would include:
Sterilization of the preparation and the fatty food composition/chocolate composition. Aseptic storage until usage for the chunk production.
Sterilization of all line parts incl. vessels, fatty food composition piping/chocolate piping, sieves, knifes, filling line etc.
Connection of the sterile, cold preparation.
Sterilization of the connectors.
Transfer of the sterile, cold preparation into the sterile vessel.
Connection of the stirred, sterile fatty food composition/chocolate composition container.
Sterilization of the connectors
Aseptic introduction of the molten fatty food composition/chocolate composition into the vessel and performing the aseptic formation of fatty food chunks/chocolate chunks
Finishing the fatty food chunks/chocolate chunks and aseptic filling into a sterile container.

Alternatively and to save production time, the filling line can be sterilized during production of the chunks if the main vessel valve maintains a suitable aseptic barrier towards the filling line.

Based on the applied process conditions and the desired level of reduction of the initial microbial load, it can be distinguished between pasteurization and sterilization. Both options are possible with the described technology.

In case of pasteurization, the fatty food composition or chocolate and semi-finished preparation should undergo a treatment suitable for the inactivation of the vegetative microbiota (for example 95 °C for 7 min). This inactivates vegetative yeasts, moulds and bacterial cells, while spores most likely survive this treatment. Therefore, special hurdles may be applied to prevent their growth during further storage of the product (e.g. cooled storage, low pH, low water activity). Regarding the equipment, a standard known for processing of pasteurized dairy products can be applied. So even if not highest aseptic standard, milk screw-connectors and butterfly valves can be an option. However, for rotational parts (pump shafts etc.) steam tracing or the application of sterile sealing media (e.g. a Glycerol-Ethanol mixture) are strongly recommended.

If a fully sterile product should be achieved, special care should be taken for the sterilization of the semi-finished preparation and the fatty food composition or chocolate. For example, this could be achieved by a heat treatment suitable to sufficiently inactive bacterial and fungal spores. Exemplarily, a treatment for 10 min at 125 °C can be applied. Simultaneously, a higher aseptic standard of the equipment (as normally seen on UHT- Ultra High Temperature production lines) is recommended. For example, butterfly- or ball-valves should be avoided and valves exhibiting a higher aseptic barrier standard (for example membrane valves) should be preferred and therefore are recommended in the present case. Additionally, a certain overpressure should be continuously maintained in the system as an additional hurdle for contamination. Sterile nitrogen may be applied to maintain the overpressure. Obviously, pasteurized products may be processed as well on lines equipped for the higher aseptic standard.

In order to provide a special experience in taste and texture, additional edible inclusions can be added to the molten fat/chocolate according to a preferred embodiment of the present invention. These inclusions can for example be different edible seeds (including nuts, legumes or cereals such as hazelnuts, walnuts, pecans, peanuts, cashews, pistachios, Brazil nuts, macadamia, almonds, pine nuts, chia seeds, flaxseeds, linseed, sesame, buckwheat, sunflower etc.) or dried or candied fruits (such as strawberries, dates, bananas, citrus fruits etc.) or vegetables, or other special ingredients (such as cocoa nibs, cocoa beans, coffee beans etc.) marshmallows and/or candy (caramels, popping candy etc.); baked- or half-baked inclusions such as cookie dough, cookies, crackers, brownies, fudge or combinations thereof; and/or wherein the fat composition contains vegetable fats, preferably shea butter, illipe butter, palm oil, soybean oil, rapeseed oil, coconut oil, cocoa butter, sunflower oil and/or palm kernel oil and/or the corresponding hardened fats. Preferably, the inclusions have a piece size between 1 and 5 mm to be well perceivable as such during consumption. Therefore, in some cases (e.g. nuts, sunflower seeds), chopping may be necessary. Additionally, there are numerous possibilities of pre-treatments of these inclusions like roasting, steaming, blanching etc. to achieve a certain taste and texture profile.

Regarding the mass ratio between the inclusion and the fat/chocolate phase, the inclusion could be added to an amount that the mixture is still flowable and can be stirred and pumped.

Typically, the additional inclusion can account for a maximum of 50 %, preferably for 5 - 40 %, more preferably for 10 - 30 %, and particularly preferably for 15 - 25 % of the chocolate/fat inclusion mixture.

For an aseptic implementation, the fat composition according to the present invention, e.g. a chocolate-nut mixture may be prepared in an aseptic way. This means that a sufficient treatment of the inclusion to achieve the desired level of remaining microbiological contamination has to be applied prior to the chunk forming process. Suitable processes include pasteurization, a treatment with steam or dry heat, high pressure processing (pascalization) or treatment with supercritical CO₂. The inclusions may be treated separately and added aseptically to the already decontaminated fat/chocolate medium or the decontamination treatment can be performed directly on the inclusion-fat/chocolate mixture. After the decontamination treatment, the material has to be stored aseptically (for example in a stirred aseptic container or vessel) until usage for the aseptic fat composition chunk or chocolate chunk forming process.

As the technology is well-suited for the aseptic production of chocolate chunks, with further processing, it is possible to recover the chunks in rinsed and (partially or totally) dried form without the matrix preparation. This is a need as the availability of fully sterile chocolate inclusions on the market is very limited and pieces in comparable shape are currently not available.

In order to obtain the chunks as such, a rinsing off the matrix from the solid chunks has to be performed in an aseptic environment excluding a recontamination of the product. This may be done by applying typical standard techniques, such as centrifugation, decantation, etc.. However, care has to be taken to prevent clogging or agglomeration of the chunks. As an example, this could be performed as follows: before the step of "completing the food chunk preparation", the preparation-chunk mixture is pumped onto a sieve and the preparation matrix is rinsed off the chunks with sterile cold water (T < melting temperature of the chunks) and the liquid is drained as far as possible. Subsequently, the chunks are dried in a flow of cold sterile air or other gases (nitrogen etc.). The sieve is arranged in a slightly slanted angle, so the particles can then be transported towards one side of the sieve and further into an aseptic storage container or buffer silo. To aid the transport, the sieve may be vibrated. In order to allow the chunks to flow more freely on the sieve and to avoid undesired agglomerations and blockages, the sieve is preferably designed as a perforated plate. In order to ensure the aseptic integrity of this part, the sieve is mounted inside a small aseptic containment (e.g. a small buffer tank or as part of a large diameter piping) preferably covering the complete inner diameter. The connections to all inlets and outlets are constructed as flexible hoses to allow the vibration of the containment including the sieve to avoid moving parts inside the aseptic barrier.

Clearly, all aseptic measures and requirements regarding sterility also apply to this apparatus. This includes for example the compliance to the already mentioned aseptic design rules (valves, connectors etc.) and a complete sterilization of this line part prior to the introduction of the preparation-chunk-mixture.

Obviously, in such a case, the matrix-preparation preferably avoids expensive ingredients and should be easy to be rinsed off the chunks during the sieving step. Therefore, stabilizers providing a very sticky texture (e.g. xanthan etc.) should be avoided, if possible. Sterile anti-cacking agent may be also applied after drying of the chunks to further prevent agglomerations during filling and storage.

Alternatively and if desired to obtain chunks at a quite large size, the described aseptic separation of the chunks could also be performed at any stage after the solidification prior to the cutting and sieving step.

The piece size distribution of the fat composition chunks or chocolate chunks is determined by a standardized wet-sieving method using a vibrated sieve shaker equipment (AS 200, Retsch GmbH, Retsch-Allee 1-5, 42781 Haan, Germany) with a row of sieves (for example 8 mm, 5 mm, 3 mm, 1 mm mesh-size, conform to ISO 3310-1). Briefly, a defined and precisely weighed amount of the preparation with chunks (e.g. 500.00 g) is applied on the top sieve of the shaker. Then the stacked sieves are continuously rinsed for 8 min with cold water under standardized conditions (5-10 °C, at a flow rate of 1.2 l/min and while automatic vibrating) to rinse off the preparation matrix and distribute the pieces to the corresponding sieve. After disassembling the stacked sieves, they are thoroughly dried as far as possible by draining and with a paper tissue and the weights are recorded. The weights of the fractions (1-3 mm, 3-5 mm, 5-8 mm, > 8 mm) are calculated based on the differences between the dry sieves and the sieves incl. the rinsed chunk fraction after sieving and drying.

According to the present invention, there is a variety of preferred target food products which may be produced by the method according to the present invention. Specifically preferred target food products are chocolate products, chocolate compounds or chocolate coatings, flavoured fat compositions, or cacao-free "cacao-like" products, such as cacao substitute products or cacao-free chocolate alternatives.

### a. Chocolate

There are different legislations in different countries. In this connection, it may e.g. be referred to the pertinent EU directive as a guideline for the definition of chocolate (EU Directive 2000/36/EC, 2000 relating to cocoa and chocolate products intended for human consumption) or to the Codex Alimentarius: STANDARD FOR CHOCOLATE AND CHOCOLATE PRODUCTS (CXS 87-1981, Adopted in 1981. Revised in 2003. Amended in 2016, 2022). For the present invention, the term "chocolate" includes chocolate products, such as "milk chocolate", "family milk chocolate", "white chocolate", "chocolate a la taza", "chocolate familiar a la taza", and "couverture chocolate", and contains i.a. cocoa butter in the amounts regulated in EU Directive 2000/36/EC.

### b. (Chocolate) Compounds/Coatings

In these "chocolate" products, the cocoa butter in chocolate is substituted by a different vegetable fat. As defined in EU Directive 2000/36/EC, chocolate may contain vegetable fats other than cocoa butter (not exceeding 5 % (of the finished product, after deduction of the total weight of any other edible matter)). Products, wherein more than 5 % vegetable fats, are therefore referred to as "coatings" according to the present invention.

There is no strict, regulated definition of a coating, but they typically contain vegetable fat or multiple vegetable fats and often use cocoa powder rather than cocoa mass.

Compound coatings are based mainly on other vegetable fats than cocoa butter, such as shea butter, illipe butter, palm oil, soybean oil, rapeseed oil, coconut oil, and/or palm kernel oil. The fats can also be hardened fats. By using these special fats and mixtures thereof, also certain special desired characteristic (melting behaviour, flavor release, no necessity of tempering etc.) can be achieved. For some specific variants of coating, there is a definition in the US for target food products according to the present invention (obtainable under eCFR :: 21 CFR 163.155 -- Milk chocolate and vegetable fat coating; eCFR :: 21 CFR 163.153 -- Sweet chocolate and vegetable fat coating; eCFR :: 21 CFR 163.150 -- Sweet cocoa and vegetable fat coating).

### c. Flavoured Fat

Flavoured fat chunks can consist of a fat that has a melting point similar to chocolate or to the range achievable with compound coatings, one or more flavors, sweeteners (incl. sugar) and/or coloring agents and/or emulsifiers. Additionally, certain bulk-filler ingredients, such as certain powders (starches, protein powders, cocoa powders, carob powders, (skim-) milk powder, cellulose, carboxymethylcellulose, polydextrose etc.) could be used to provide a less fatty appearance and replace some volume of the fat (similar to the chocolate solids in the chocolate chunks). Fruit powders, nut pastes etc. could also be used. Also savory or even spicy options are possible.

There are uncountable possibilities, some example recipes could be as follows:

### Caramel chunks:

89.8 % Hydrogenated palm kernel oil
8 % Sugar
1.0 % Caramel color
0.7 % Caramel Flavor
0.5 % salt

### Strawberry chunks:

80.8 % Cocoa butter
10 % Freeze-dried strawberry powder
7.5 % Sugar
0.9 % Natural Strawberry Flavor
0.8 % Natural Color

### Jalapeño-chili chunks:

91.6 % Cocoa butter
4 % Chili Extract oil
2 % Cellulose powder
1 % Artificial color
0.6 % Jalapeño flavor
0.6 % Salt
0.2 % sunflower lecithin

### Peanut chunks

72 % Hydrogenated coconut oil
22.5 % Peanut paste
4 % Sugar
0.7 % Salt
0.3 % Natural color
0.3 % Natural peanut flavor
0.2 % Soy lecithin

### d. Cacao substitute or Cacao-free chocolate alternative products

This group encompasses products emerging with the trend (and need) of replacements for chocolate mimicking the taste and texture of real cocoa-derived chocolate. Such alternatives can be used either alone or as a mixture with real cocoa-derived chocolate to reduce the environmental footprint of the product. For example, such a product is described as "flavor composition" in WO 2023/285547 A1 and can be based on different raw materials (for example apricot kernels, plum kernels, peach kernels, cherry kernels, almond, jackfruit seeds, grape seeds, carob, beans, cereals, pseudo-cereals, non-cereal grains, potato, pomace, cassava root, yeast, and combinations thereof).

Commercial products are currently offered from several companies: Planet A Foods GmbH (Fraunhoferstr. 11a, 82152 Planegg), Nukoko (13b Surrey Technology Centre 40 Occam Road, Surrey Research Park, Guildford, England, GU2 7YG), Voyage Foods, Inc. (2500 Campbell St Oakland, California 94607, US), Foreverland Food S.r.l. (Via Alessandro Volta, 37, 70014 Conversano (BA), Italia). Further alternatives are certainly under development and will be available on the market soon as this is a strongly emerging segment.

The process according to the present invention can also be applied on preparations that are at temperatures below the point that is commonly referred to as the freezing temperature ("half-frozen preparations", such as e.g. sorbets or sorbet-like preparations). The preparations applied for the present invention often consist of water and solutes (for example sucrose, glucose, salts, etc.) in relatively high concentrations (for example 65 % sucrose). To an expert skilled in the art, it is well known that the freezing point of a solution decreases with increasing concentration of solutes, and additionally, the freezing follows a certain sequence: As described in several standard-literature (e.g. Food Chemistry, 4th revised and extended edition, Springer-Verlag Berlin-Heidelberg, 2009, ISBN 978-3-540-69933-0, Belitz et al. (Eds.), chapter 0.3.3, pages 6/7; "Food Processing Handbook", 2nd Ed. (2012), Brennan et al. (Eds); 4.4 Freezing Kinetics", 145-146), during the cooling of an aqueous solution below the freezing point, a part of the water crystallizes and causes the dissolved substances to become enriched in the remaining fluid phase (unfrozen water). This cooling step yields a mixture of water ice-crystals and a more concentrated solution than the starting solution. This phenomenon can for example be used for the production of concentrated fruit juices and is commercially referred to as "cryoconcentration" or "freeze concentration". According processing plants for the gentle concentration of various solutions are available from different manufacturers.

The present invention can also be applied on preparations in this semi-frozen state exhibiting simultaneously ice-crystals and liquid solution, as long as mixing by agitation is still possible. As in such a case, the latent heat of ice melting is additionally available for cooling and moreover for the solidification of the fat/chocolate, the use of a preparation in such a state could even be beneficial for the process and the final achievable product (shape, taste, color and appearance of the chunks).

The freezing point of the food preparation according to the present invention is preferably below 0 °C, more preferably below -5 °C, yet more preferably below -10 °C, even more preferably below - 15 °C. As such, T1 can be chosen to be well above the freezing point of the food preparation to render it flowable, whilst also ensuring that T1 is well below the melting point of the fat composition or chocolate, such that the fat composition or chocolate can solidify rapidly upon addition to the food preparation.

The temperature T1 at which the food preparation is kept in step (a) preferably ranges from -15 to 10 °C, preferably from -10 to 5°C, more preferably from -10 to 3 °C, yet more preferably from -5 to 3 °C. This allows for the food preparation to be flowable and thus to be stirred, and also allows for commonly available fat compositions or chocolates (which are typically solid at room temperature, i.e. around 23 °C) to solidify when added to the food preparation. On the other hand, also very high melting, wax-like fat composition or chocolate may be used. Then the melting point would be around 60 °C and the max. allowed matrix temperature sufficient to solidify this fat composition or chocolate could be quite close below that (e.g. 50 °C).

Prior to step (a), the food preparation is preferably kept below 15 °C, preferably below 5 °C, more preferably below 0 °C, yet more preferably below -5 °C, even more preferably of from -10 to 0 °C, particularly preferably at T1, preferably for at least 24 h, more preferably at least 48 h, particularly preferably at least 60 h. This pre-cooling can allow for the food preparation to acclimatize and thus to reach an optimal consistency, such that the molten chocolate can be added to a well-prepared base, hereby enhancing the overall mouthfeel and enjoyment of the final food preparation. Also, acclimatization can give flavors of the food preparation time to develop and intensify, resulting in a more flavorful final food preparation. Finally, acclimatization can ensure that flavors and/or textures are consistent throughout the food preparation, thus allowing for an improved homogeneity and reliability of the final food preparation. However, this step may also simply be used to cool down the preparation before addition of the fat composition or chocolate to the desired starting temperature of the process. The acclimatization is, of course, neither mandatory nor necessary for the method according to the present invention; the preparation is - in principle - ready as soon as the desired low temperature is reached.

In step (b), the molten fat composition or chocolate with a melting point of above T1 is provided and added to the food preparation under stirring with the first rotation speed S1, whereupon the fat composition or chocolate solidifies at least partially, preferably whereupon the fat composition or chocolate solidifies completely. The expression "molten fat composition" or "molten chocolate" can also be referred to as "melted fat composition" or "melted chocolate" and intends to signify that the fat composition or chocolate is above its melting temperature and thus in a liquid state. The fat composition or chocolate solidifying at least partially means that the temperature of said part of the fat composition or chocolate is reduced to below the melting point of the fat composition or chocolate upon its addition to the food preparation. The melting point of the fat composition or chocolate can depend on the type of fat and/or on whether the fat composition or chocolate is tempered. For example, fat composition or chocolates with a melting point ranging from 20 to 60 °C can be used in the method.

The terms "solidifying" and "solidification" with respect to step (b) relate to the process of crystallization of fat crystals from the molten fat composition upon contact with the food preparation (e.g. at temperature T1). This process is well understood and described (s. e.g. "Industrial Chocolate Manufacture and Use: Fourth Edition", Edited by Stephen T. Beckett, 2009 Blackwell Publishing Ltd., ISBN: 978-1-405-13949-6; Chapter 12 - 13; pages 261 - 319) and can also be referred to as "fat crystallization".

The provided fat composition or chocolate can be tempered, preferably at a melting temperature of from 50 to 70 °C, more preferably from 50 to 65 °C, yet more preferably from 50 to 60 °C. Tempering is preferably performed until the fat composition or chocolate is fully melted, and/or preferably under stirring. Thereafter, the fat composition or chocolate is preferably cooled to the temperature T2. For most applications, fat composition or chocolate is tempered to obtain a certain form of fat crystals that exhibit preferrable characteristics (higher melting point, less fat bloom etc.). Therefore, fat composition or chocolate for a lot of applications (bars etc.) is normally tempered. For the present invention, tempering is factually not really necessary as most of the final products envisaged by the present invention are consumed cold anyway (yoghurt, ice cream etc.). Therefore, the use of tempered fat composition or chocolate is clearly optional but may be preferred for some products. The tempering process usually comprises the step of melting of the fat composition or chocolate to destroy all present fat crystals. Then the fat composition or chocolate is cooled down to a temperature at which crystallization starts and a mixture of different possible fat crystal forms are created. Then it is reheated just a bit to re-melt the not desired crystal forms while the desired forms (exhibiting improved melting characteristics such as higher melting temperature) remain. Normally, this is done in special tempering machines that also introduce certain shear stress on the fat composition or chocolate which supports the formation of the fat crystals and make it more controllable. Finally, when the tempered fat composition or chocolate is then cooled down to solidify, the higher amount of desired fat crystal forms act as seed crystals and preferably further crystals in that form are created. Typically, tempering is performed at the following temperatures: Melting at minimum of 50 °C, then cooling to 27-30 °C (depending on the fat composition or chocolate) and then re-heating to around 29-32 °C (also depending on the fat composition or chocolate). However, as mentioned above, tempered and not tempered fat composition or chocolate may be used in the method according to the present invention.

Tempering, however, can further improve the texture of the resulting fat composition chunks or chocolate chunks, such as their gloss and is therefore a preferred embodiment of the present invention. Also, tempering of the fat composition or chocolate can help to prolong the fat composition's or chocolate's storage stability, as a stable crystal structure can be formed which can reduce the risk of fat bloom that could cause a white or grayish discoloration that can occur on the fat composition's or chocolate's surface over time. Also, tempering can improve both the handling of the molten fat composition or chocolate (hereby facilitating its addition to the food preparation) and the heat resistance of the molten fat composition or chocolate (hereby facilitating the formation of an at least partially solidified fat composition or chocolate layer when added to the food preparation).

Preferably, the provided fat composition or chocolate and/or food preparation is pasteurized, preferably at a temperature of from at least 55 °C, especially from at least 60 °C, and/or preferably for 3 to 15 min; is treated with steam or dry heat; is treated with supercritical CO₂, is treated with high pressure processing, preferably at a temperature of from at least 0 °C, preferably from at least 25 °C, especially from 35 to 65 °C, and/or preferably for 1 to 10 min and/or preferably at 1000 to 10000 bar or more preferably at 5000 to 8000 bar; or wherein preservatives are added to the fat composition or chocolate and/or food preparation, preferably benzoic or sorbic acid and/or their corresponding salts; or combinations of these steps. This helps to eliminate any potential health risks, such that the fat composition or chocolate can remain microbially stable, fresh and safe for consumption for a longer period of time. It is well known to a person skilled in the art that the exact conditions for pasteurization, etc. depend inter alia on the used fat composition or chocolate.

It is preferred that the fat composition or chocolate has a fat content of at least 50 wt%, more preferably at least 60 wt%, yet more preferably at least 65 wt%, yet more preferably of from 50 to 95 wt%, even more preferably of from 60 to 95 wt%, particularly preferably of from 65 to 90 wt%, based on the total weight of the fat composition or chocolate. A high fat content can enhance the long-term stability of the fat composition or chocolate in a watery medium, such as a yoghurt or ice cream. However, fat composition chunks or chocolate chunks can also be formed when using a fat composition or chocolate with a lower fat content, e.g. 10 wt%, 20 wt% or 30 wt%.

Preferably, the molten fat composition or chocolate is provided in step (b) at a temperature T2, wherein T2 is above the melting point of the fat composition or chocolate, and wherein T2 preferably ranges from 20 to 70 °C, more preferably from 25 to 50 °C, yet more preferably from 25 to 35 °C. This allows for the molten fat composition or chocolate to be well flowable, such that it can easily be added to the food preparation, such as without applying a high pressure. At the same time, a thermal destruction and/or degradation of ingredients of the fat composition or chocolate can be avoided.

The molten fat composition or chocolate is preferably stirred prior to its addition to the food preparation, preferably with a rotation speed of from 100 to 500 rpm, more preferably from 200 to 400 rpm. However, necessary speeds to prevent sedimentation strongly depend on the geometry of the stirrer. Accordingly, other rotation speeds may be preferred for different stirrer geometries. It is also possible to pump it in circle to avoid sedimentation. This can help to prevent the formation and/or sedimentation of fat composition or chocolate solids and to keep the fat composition or chocolate at a constant temperature, preferably at the temperature T2.

Preferably, the food preparation is stirred prior to the addition of the molten fat composition or chocolate. This can help to homogenize ingredients of the food preparation, and/or to prevent the formation and/or sedimentation of solids. Preferably, the food preparation is stirred with a rotation speed of from 5 to 20 rpm prior to the addition of the molten fat composition or chocolate, preferably from 4 to 10 rpm. Stirring with a rotation speed in this range allows for a good homogenization of the food preparation whilst avoiding the risk of separation of ingredients (e.g. in dairy products: separation of fat and/or proteins from liquid), the incorporation of air and/or the loss of texture. Preferably, the food preparation is stirred for at least 2 min prior to the addition of the molten fat composition or chocolate, preferably at least 5 min, more preferably of from 2 to 15 min, yet more preferably from 5 to 10 min. This allows for a good homogenization of the food preparation, and also for a constant rotational movement to develop already prior to the addition of the molten fat composition or chocolate, which can further improve the homogeneity of the fat composition layer or chocolate layer formed upon at least partial solidification of the fat composition or chocolate upon its addition to the food preparation.

The molten fat composition or chocolate is preferably added to the food preparation with a predetermined mass flow rate This allows for the fat composition or chocolate to uniformly distribute onto the surface of the food preparation such to form a homogeneous, partially solidified fat composition or chocolate layer. This yields a good balance between formation of a homogeneous fat composition or chocolate layer and processing efficiency. The exact mass flow rate can vary depending on the viscosity of the molten fat composition or chocolate (which in turn can depend on the temperature and composition of the fat composition or chocolate). Another parameter to define preferred flow rates (especially for large scale production) take also increased fat composition or chocolate flow rates into consideration and - due to the larger equipment - also the available surface into consideration. The available surface is accordingly larger and the flow rate of fat composition or chocolate addition can therefore be safely increased. Moreover, not only one inlet, but several inlets could be used to apply the fat composition or chocolate on top of the preparation. Accordingly, the ratio between the mass flow rate of the chocolate and the surface area of the preparation is a suitable process parameter especially for large-scale preparation. Accordingly, the present method is performed at preferred mass flow ranges of at least 100 kg/h per m² of available surface, preferably at least 300 kg/h per m² of available surface, especially at least 1000 kg/h per m²of available surface. Alternatively, the present method is performed at preferred mass flow ranges of from 100 kg/h to 2000 kg/h per m² of available surface, preferably from 200 kg/h to 1000 kg/h, per m² of available surface, especially from 300 to 500 kg/h, per m²of available surface.

According to the present invention "available surface" means the surface on top of the cold preparation inside the vessel. So everywhere, where chocolate can be applied and which is available to form the chocolate film on top of the preparation. For vessels larger in diameter it is higher, for narrow vessels with low diameter it is lower. If the surface is larger, the chocolate can be applied at a higher flow rate, because a larger area for heat exchange between the cold preparation and the molten fat composition is available.

The stirring in step (b) is preferably performed for 2 to 20 min, preferably 5 to 15 min, more preferably 5 to 12 min. This allows for the fat composition or chocolate to at least partially solidify and to develop a homogeneous fat composition or chocolate layer, which in turn can improve the quality of the formed fat composition chunks or chocolate chunks.

The amount of molten chocolate fat composition or added to the food preparation preferably ranges from 1 to 30 wt%, more preferably from 3 to 20 wt%, yet more preferably from 5 to 15 wt%, with respect to the combined weight of the food preparation and the fat composition or chocolate. The fat composition chunks or chocolate chunks are then well perceivable by the consumer. As such, an excellent experience in taste and sensation of the food preparation comprising fat composition chunks or chocolate chunks can be obtained.

The molten fat composition or chocolate is preferably added onto a surface of the food preparation. Upon at least partial solidification of the fat composition or chocolate, a homogeneous, smooth fat composition or chocolate layer can then be formed onto the surface of the food preparation, which can improve the quality of the subsequently formed fat composition chunks or chocolate chunks. The surface of the food preparation preferably has a size of from 0.3 to 3 m², preferably from 1.5 to 2.5 m², and/or a thickness of the formed fat composition or chocolate layer is preferably from 3 to 30 mm, more preferably from 5 to 15 mm. This can assist the fat composition or chocolate in solidifying rapidly and enhance the quality of the formed fat composition or chocolate layer.

An angle between a surface of the molten fat composition or chocolate and a direction of flow of a stream of the molten fat composition or chocolate is preferably from 70 to 110°, preferably from 80 to 100°. This can support the distribution of the fat composition or chocolate over the surface of the food preparation and in consequence the quality of the fat composition chunks or chocolate chunks.

The molten fat composition or chocolate is preferably added to the food preparation via a tube. The mass flow rate, temperature and/or position of addition of the fat composition or chocolate can then be well controlled. In an aseptic set-up, a fixed piping may be installed (e.g. in the Lid of the vessel, or through the vessel wall above the surface of the preparation). Moreover, as already mentioned, in a large production equipment also more than one fat composition or chocolate inlet could make sense to achieve the desired fat composition or chocolate mass flow and productivity.

The tube preferably has a constant inner cross-section over its length. The tube's inner cross-section then does not comprise a tapering section, a broadening section and/or a nozzle. This allows for the molten fat composition or chocolate to be guided with a constant laminar flow rate throughout the length of the tube and up to an outlet surface of the tube. As such, the fat composition or chocolate can be added to the food preparation in a controlled manner and at a comparatively low speed (i.e. without being injected), which can assist in the formation of a homogeneous, at least partially solidified fat composition or chocolate layer. Preferably, the inner cross-section of the tube is from 100 to 150 mm², more preferably from 115 to 135 mm², yet more preferably from 120 to 130 mm². This allows for the mass flow rate of the fat composition or chocolate exiting the tube to be accurately adjusted, and also can allow for the fat composition or chocolate to be added comparatively slowly, such to support the formation of a homogeneous, at least partially solidified fat composition or chocolate layer.

A distance between the outlet surface of the tube and a surface of the food preparation preferably ranges from 1500 to 50 mm, preferably from 500 to 300 mm. As such, a physical contact between the tube and the food preparation (and the fat composition or chocolate after its addition to the food preparation) can be avoided even when stirring at the higher, second rotation speed S2. This can ensure that the molten fat composition or chocolate is exclusively added onto the surface of the food preparation. At the same time, a good processing efficiency can be maintained, such as a good temperature control of the food preparation.

Preferably, the tube comprises an insulating jacket. This allows for keeping the temperature of the molten fat composition or chocolate at which it is added to the food preparation constant, thus allowing for a reproducible processing.

The first rotation speed S1 is preferably 15 rpm or below, more preferably 10 rpm or below, yet more preferably of from 09 to 01 rpm, even more preferably from 06 to 02 rpm, particularly preferably from 04 to 02 rpm. This allows for the fat composition or chocolate to solidify at least partially, preferably completely, such to develop a smooth, homogeneous fat composition or chocolate layer before breaking the at least partially solidified fat composition or chocolate into fat composition chunks or chocolate chunks. Again, it has to be emphasised that the suitable agitation speeds also strongly depend on the vessel and agitator geometries.

Generally, the agitator should reach sufficiently close to the surface and/or should be designed in a way that, considering the special viscosity properties of the cold preparation (high viscosity and certain yield point), it enables a moderate submersion of the partially solidified fat composition/chocolate film from the surface under reasonable stirring speeds.

This can be achieved by different stirrer geometries and configurations. In case of a combination of stirrers (e.g. scrapers and a second stirrer), the second stirrer can especially help to perform the desired submersion under well-controlled conditions. For example, the second stirrer can either be a vertical or angled screw/spiral or in case of a co-axial agitator, a central stirrer with paddles reaching preferably horizontally towards the independently rotating scrapers. A slightly angled positioning of the paddles can aid the controlled submersion of the partially solidified chocolate from the surface. Possibly similar results are achievable with different or simpler stirrer geometries such as a sole central stirrer with angled, horizontal paddles and fixed counterparts reaching from the vessel walls towards the vessel center. Generally, attention to the filling level has to be paid to ensure the required proximity to the surface for submersion of the partially solidified fat composition/chocolate.

The present invention was tested on different kind of stirrers and vessel geometries and the following parameters were found to be well suitable for the production of nicely shaped chocolate chunks: In case of a scraper/screw configuration with vessel dimensions of 800 mm diameter and 457 mm height, referring to the working volume, and a screw diameter of 200 mm, stirring speeds of 2 rpm and 17 rpm for the scrapers and the screw, respectively, were found suitable values during chocolate addition. In a different configuration with a sole central stirrer exhibiting angled, horizontal paddles towards the vessel walls (vessel diameter 1450 mm and height 1350 mm referring to the working volume), 5 rpm were successfully applied to produce satisfactory chocolate chunks. Especially in the latter case, an even lower rotational speed would have been beneficial to yield a product with larger chunk size.

In a further example, a satisfactory production of chunks was performed in a scraper/screw configuration with a vessel diameter of 1780 mm and height of 1218 mm with respect to the working volume and a screw diameter of 350 mm at rotational speeds of 3 rpm and 15 rpm for the scrapers and the screw, respectively.

As an example for the opposite case, simple propeller mixers close to the bottom of the vessel designed for low-viscosity media that do not lead to a sufficient submersion of the partially solidified chocolate layer from the surface even at high rotational speeds are rather not suitable to perform the described process.

Moreover, typically vertical vessels are suitable for application of the inventive method. Horizontal vessels appear rather not suitable for the production of fat composition chunks or chocolate chunks in the desired size, as due to the nature of the agitation (paddles rotating around a horizontal shaft) the fat composition or chocolate is immediately submerged from the surface and thus cannot form the desired film on the surface to perform the at least partial solidification before submersion into the cold preparation. This will result in the formation of very thin (mainly below 1 mm thickness) flake-like particles which exhibit less crunchiness than pieces obtained in vertical vessels. However, for certain very special applications (drinking yoghurts at which the visual impression of containing pieces is of higher importance than their textural perception) such an approach may be appropriate.

Preferably, an increase of the temperature of the food preparation upon addition of the molten fat composition or chocolate is below 15 °C, more preferably below 12 °C, yet more preferably below 10 °C. This ensures that the final temperature (i.e. the temperature of the food preparation which is reached after fat composition or chocolate addition) stays below the melting temperature of the fat composition or chocolate, such that the subsequently formed fat composition chunks or chocolate chunks are stable enough for further processing (e.g. cutting, filling). Also, this moderate temperature increase allows for the properties of the food preparation, particularly its viscosity, to remain essentially constant, such that the stirring can be performed in a stable manner. Furthermore, molten fat composition or chocolate added at a later time can then at least partially solidify within a similar time and in a similar way as molten fat composition or chocolate added already earlier.

After addition of the molten fat composition or chocolate and prior to step (c), stirring with the first rotation speed preferably continues for at least 2 min, more preferably for at least 5 min, yet more preferably for at least 10 min, yet more preferably for 2 to 20 min, even more preferably for 5 to 15 min, particularly preferably for 8 to 12 min.

In step (c), the food preparation and the fat composition or chocolate are stirred with the second rotation speed S2 higher than S1 to form fat composition chunks or chocolate chunks from the at least partially solidified fat composition or chocolate.

The second rotation speed S2 is preferably 15 rpm or above, more preferably 20 rpm or above, yet more preferably of from 20 to 45 rpm, even more preferably from 23 to 45 rpm, particularly preferably from 25 to 35 rpm. This allows for the at least partially solidified fat composition or chocolate to be efficiently broken, and can also enhance the quality of the resulting fat composition chunks or chocolate chunks with respect to their sizes and shapes. Again, it may be emphasised that the rotation speed may also be dependent on the geometry of the vessel and the geometry of the agitator. For example in large diameter agitators, the rotational speed is normally lower than of those with smaller diameter to achieve similar path velocities at the outer tip of the agitator. As this step is performed to break very large blocks of fat composition or chocolate (can be even 10 cm on the longest axis), additional fixed hurdles close to the stirrer (leaving a relatively small gap) can support the efficiency of the process. Therefore, lower rotational speeds may be sufficient to reach the desired effect of size reduction.

The second rotation speed S2 is preferably at least 3 times higher than the first rotation speed S1, more preferably at least 4 times, yet more preferably at least 5 times. This can provide a good efficiency in forming fat composition chunks or chocolate chunks from the at least partially solidified fat composition or chocolate. Preferably, S2 is 3 to 7 times higher than S1, more preferably 5 to 6 times. Fat composition chunks or chocolate chunks with an excellent quality can result thereof, particularly with sizes, shapes and/or textures allowing for an excellent mouth feel and crunchiness when consuming the inventive food preparation comprising fat composition chunks or chocolate chunks.

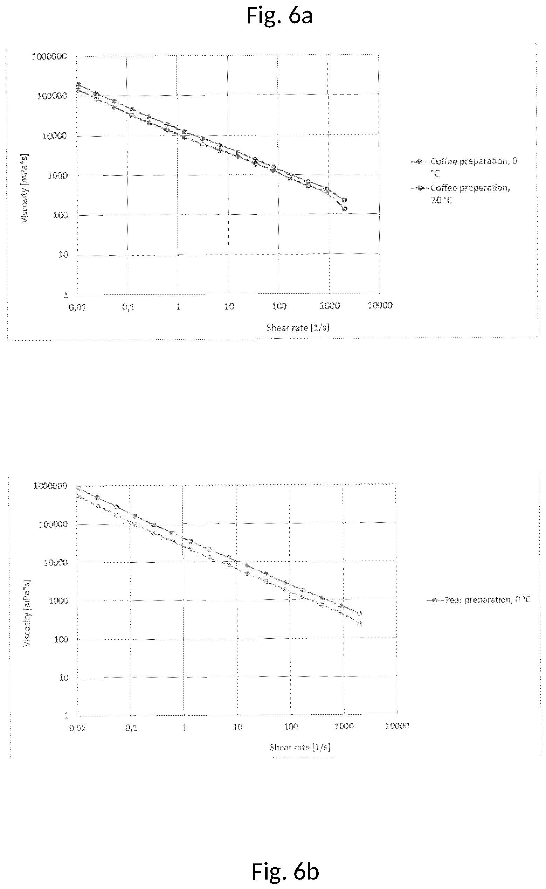

The geometry of the stirring vessel may easily be adjusted by a person skilled in the art to the needs of the present invention. Of course, the stirring equipment has to be suitable for stirring the food mass in the stirring vessel in consideration of the viscosities of the different ingredients and the resulting mass inside the stirring vessel. Suitable viscosity ranges for given stirring geometries and food masses are referred to in the illustrative examples in the example section and in Figs. 6a to 6d with four model preparations (coffee, pear, banana, stracciatella).

Preferably, step (c) is performed under vacuum, preferably at a pressure of 900 mbar or below, more preferably at 800 mbar or below, yet more preferably at 600 mbar or below, even more preferably at 400 mbar or below, particularly preferably at 200 mbar or below. Due to the second stirring speed S2 being comparatively fast, air bubbles are likely to emerge. Performing step (c) under reduced pressure can reduce prevent gassing and the formation of air bubbles, and thus can increase both the quality and storage stability of the produced food preparation comprising fat composition chunks or chocolate chunks.

The stirring in step (c) is preferably performed for 2 to 15 min, more preferably 4 to 12 min, yet more preferably 5 to 10 min. This renders a good balance between processing efficiency and the quality of the resulting fat composition chunks or chocolate chunks.

Preferably, a stirrer comprising an inner stirrer and an outer stirrer are used for stirring in steps (b) and (c). The outer stirrer can comprise an anchor stirrer and/or a scraper, such to transport the at least partially solidified fat composition or chocolate towards the inner stirrer. The inner stirrer can comprise a screw, such to submerge the at least partially solidified fat composition or chocolate into the food preparation.

Preferably, the inner stirrer and the outer stirrer are rotated in opposed directions. It was found that this can significantly reduce or even avoid the formation of fine fat composition flakes or chocolate flakes with a size of below 0.5 mm, preferably of below 1 mm (with size relating to the size of the fat composition or chocolate flakes in their largest dimension). Such fine fat composition or chocolate flakes are thin (almost paper-like) and not preferred due to organoleptic reasons (e.g. bad mouthfeel, no crunch).

Preferably, in step (b), the rotation speed of the inner stirrer is 30 rpm or below, more preferably 25 rpm or below, yet more preferably of from 10 to 25 rpm, even more preferably from 12 to 23 rpm, particularly preferably from 15 to 20 rpm; and/or the rotation speed of the outer stirrer is 12 rpm or below, more preferably 10 rpm or below, yet more preferably of from 8 to 1 rpm, even more preferably from 5 to 1 rpm, particularly preferably from 1 to 2 rpm. As such, the outer stirrer can transport the at least partially solidified fat composition or chocolate very slowly towards the inner stirrer, and the at least partially solidified fat composition or chocolate can remain at the top of the food preparation for a certain time.

Preferably, in step (c), the rotation speed of the inner stirrer is 30 rpm or above, more preferably 40 rpm or above, yet more preferably of from 45 to 80 rpm, even more preferably from 50 to 75 rpm, particularly preferably from 60 to 70 rpm; and/or the rotation speed of the outer stirrer is 13 rpm or above, more preferably 15 rpm or above, yet more preferably of from 20 to 35 rpm, even more preferably from 21 to 30 rpm, particularly preferably from 22 to 26 rpm. This allows for the at least partially solidified fat composition or chocolate to be efficiently broken and submerged into the food preparation by the inner stirrer.

In step (d), the food preparation comprising chocolate chunks is completed. Preferably, completing the food preparation comprising fat composition chunks or chocolate chunks comprises cutting, sieving and/or packaging, particularly preferably cutting and subsequent sieving. Cutting allows to further reduce the size of the formed fat composition chunks or chocolate chunks, whilst sieving allows for the fat composition chunks or chocolate chunks to maintain their irregular shape and size whilst separating larger fat composition chunks or chocolate chunks off from the food preparation. A combination of cutting and sieving can thus result in a food preparation comprising fat composition chunks or chocolate chunks with an exceptional sensation in taste and texture.

Preferably the cutting comprises cutting at least a part of the fat composition chunks or chocolate chunks with cutter. An inline cutter is preferably used, allowing the food preparation comprising fat composition chunks or chocolate chunks e.g. to be continuously cut and filled into a container right thereafter (and, if applied, after sieving). The cutter preferably comprises a rotor comprising a blade. During cutting, the rotor is preferably rotated with a speed of from 100 to 600 rpm, preferably from 200 to 550 rpm. This allows for the size of the resulting fat composition chunks or chocolate chunks to be tailored well. Especially when using an inline cutter, the rotation speed of the rotor can be well adjusted to the mass flow rate of the food preparation comprising fat composition chunks or chocolate chunks which is passed through. Preferably, the blade is curved, particularly preferably in a direction perpendicular to an axis of rotation of the rotor. This can enhance the cutting efficiency, as it allows the blade to contact the fat composition chunks or chocolate chunks being cut at a greater angle. Preferably, the rotor comprises 2 or more blades, preferably 4 or more blades, more preferably of from 4 to 15 blades, yet more preferably of from 6 to 10 blades. This can provide for a good processing efficiency whilst avoiding the risk of an excessive reduction of the size of the fat composition chunks or chocolate chunks.

The sieving preferably comprises continuously passing the food preparation comprising fat composition chunks or chocolate chunks through a sieve. The sieve preferably comprises a perforated plate. This allows for a good balance between an efficient sieving and a stiffness sufficient to withstand a compression force the sieve is exposed to when the food preparation is guided through the sieve. The perforated plate is preferably made of a metal, particularly preferably steel, such to obtain a high stiffness and strength. The perforated plate preferably has round perforations. This allows to remove any fat composition chunks or chocolate chunks having an elongated shape from the preparation. A cross-section of a perforation of the sieve preferably ranges from 20 to 300 mm², preferably from 80 to 200 mm², more preferably from 110 to 175 mm². As such, larger-sized fat composition chunks or chocolate chunks that do not fit through the perforations can be separated off from the food preparation which results in a high-quality food preparation comprising fat composition chunks or chocolate chunks with a narrower size distribution.

Completing the food preparation comprising fat composition chunks or chocolate chunks preferably (further) comprises packaging the food preparation comprising fat composition chunks or chocolate chunks into a container. The container can be a storage-stable container and/or a ready-to-sell container. For example, the container can be a yoghurt cup and/or an ice cream packaging or a bulk container for further transport (e.g. a 400 to 1000 l stainless steel container).

Preferably, the fat composition chunks or chocolate chunks have a size (in the largest extension) of from 1 to 10 mm, preferably 1 to 8 mm, especially 1 to 5 mm. The fat composition chunks or chocolate chunks are then both well perceivable and bite-sized, which can further enhance the enjoyment during consumption. This size intends to refer to the size of the fat composition chunks or chocolate chunks in their largest dimension. However, also a larger chunk size may be produced by the technology according to the present invention, for example with a longest extension of 15 mm or 20 mm. The maximum size of the fat composition particles or chocolate particles is more or less defined by the openings of the sieve of the cutter. For example, particles up to 20 mm may be suitable for certain applications (e.g. for ice-cream). Normally the size limitation of the fat composition or chocolate particle is chosen depending on the nature of the final product depending on the size of particles that can be handled by the filling machines for the final products without blocking of nozzles.

The present invention is also directed to a device for producing a food preparation comprising fat composition chunks or chocolate chunks, preferably with the inventive method, comprising
a vessel for providing the food preparation,
a tube for adding the molten fat composition or chocolate to the vessel, wherein the tube is configured to guide the molten fat composition or chocolate with a constant flow rate up to an outlet surface of the tube, and
a stirrer arranged in the vessel, wherein the stirrer is configured to stir the food preparation before, during and after the addition of the molten fat composition or chocolate to the vessel.

The tube being configured to guide the molten fat composition or chocolate with a constant flow rate up to an outlet surface of the tube signifies that the tube has a constant inner cross-section (i.e., a constant inner cross-section over the entire length of the tube and up to an outlet surface of the tube). As such, the tube's inner cross-section does not comprise a tapering section and/or a broadening section, and the tube does not comprise a nozzle. This allows for the molten fat composition or chocolate to be guided with a constant, laminar flow rate throughout the length of the tube and up to an outlet surface of the tube. As such, the fat composition or chocolate can be added to the food preparation in a controlled manner and at a comparatively low speed (i.e. without being injected), which can assist in the formation of a homogeneous, at least partially solidified fat composition or chocolate layer. The tube preferably has an inner cross-section of from 100 to 150 mm², more preferably from 115 to 135 mm², yet more preferably from 120 to 130 mm². This allows for the mass flow rate of the fat composition or chocolate exiting the tube to be accurately adjusted, and also can allow for the fat composition or chocolate to be added comparatively slowly, such to support the formation of a homogeneous, at least partially solidified fat composition or chocolate layer.

The stirrer being configured to stir the food preparation before, during and after the addition of the molten fat composition or chocolate to the vessel signifies that the food preparation is added to the vessel before the molten fat composition or chocolate is added, such to be able to stir the food preparation already then. Preferably, the vessel comprises one inlet for adding the food preparation and the molten fat composition or chocolate to the vessel (i.e., exactly one inlet). As the food preparation is added to the vessel before adding the molten fat composition or chocolate, the vessel does not need to be equipped with two or more inlets, as a simultaneous addition of the food preparation and the molten fat composition or chocolate does not occur.

Preferably the vessel is a pasteurizer. This allows to operate the vessel under definite conditions, particularly at a definite temperature and/or at a definite pressure, such to improve the reproducibility.

The working volume of the vessel preferably has a ratio of diameter [or length] to height of from 1:2 to 2.5:1, preferably from 2:1 to 1.5:1. This allows for a good homogenization of the food preparation and the formed fat composition chunks or chocolate chunks and for a good processing efficiency. Also, the fat composition or chocolate can then solidify at least partially in a rapid manner, and a homogeneous, uniform fat composition or chocolate layer can be formed.

Preferably, an angle between a longitudinal axis of the tube and a longitudinal axis of the vessel is from 70 to 110°, preferably from 80 to 100°. This can support the distribution of the chocolate over the surface of the food preparation and in consequence the quality of the fat composition chunks or chocolate chunks.

The tube preferably comprises an insulating jacket or heat tracing. This allows for keeping the temperature of the molten fat composition or chocolate at which it is added to the food preparation constant, thus allowing for a reproducible processing.

A distance between the outlet surface of the tube and a maximum filling level of the vessel ranges from 1500 to 50 mm, preferably from 500 to 300 mm. As such, a physical contact between the tube and the food preparation (and the fat composition or chocolate after its addition to the food preparation) can be avoided even when stirring at a high speed, such as the second rotation speed S2. This can ensure that the molten fat composition or chocolate is exclusively added onto the surface of the food preparation. At the same time, a good processing efficiency can be maintained, such as a good temperature control of the food preparation.

Preferably, the device further comprises a storage tank for storing the food preparation prior to its transfer to the vessel. The storage tank can be temperature-controlled, particularly coolable, such as down to -20 °C. The food preparation can then be kept in the storage tank prior to the inventive method, which can allow for the food preparation to acclimatize.

Preferably, the stirrer comprises an inner stirrer and an outer stirrer. The outer stirrer preferably comprises an anchor stirrer and/or a scraper. As such, it can be configured to transport the at least partially solidified fat composition or chocolate towards the inner stirrer. Preferably, the outer stirrer extends from an axis of rotation to a mantle-near region of the vessel. This allows to efficiently transport the at least partially solidified chocolate towards the inner stirrer regardless of their relative position in the vessel. The inner stirrer preferably comprises a screw. As such, it can be configured to submerge the at least partially solidified fat composition or chocolate into the food preparation.

Preferably, the inner stirrer and the outer stirrer are configured to be rotatable in opposed directions. It was found that this can significantly reduce or even avoid the formation of fine fat composition or chocolate flakes with a size of below 0.5 mm, preferably of below 1 mm (with size relating to the size of the fat composition or chocolate flakes in their largest dimension). Such fine fat composition or chocolate flakes are thin (almost paper-like) and not preferred due to organoleptic reasons (e.g. bad mouthfeel, no crunch).

The device preferably further comprises means for completing the food preparation comprising fat composition chunks or chocolate chunks.

The device preferably comprises a cutter for cutting at least a part of the fat composition chunks or chocolate chunks. Cutting allows to further reduce the size of the formed fat composition chunks or chocolate chunks, whilst sieving allows for the fat composition chunks or chocolate chunks to maintain their irregular shape and size whilst separating larger fat composition chunks or chocolate chunks off from the food preparation. It is preferred that the cutter is an inline cutter. This allows for the food preparation comprising fat composition chunks or chocolate chunks to be continuously processed and cut. The cutter preferably comprises a rotor comprising a blade. The blade is preferably curved, particularly preferably in a direction perpendicular to an axis of rotation of the rotor. This can enhance the cutting efficiency, as it allows the blade to contact the chocolate chunks being cut at a greater angle. The rotor preferably comprises 2 or more blades, more preferably 4 or more blades, yet more preferably of from 4 to 12 blades, even more preferably of from 6 to 10 blades. This can provide for a good processing efficiency whilst avoiding the risk of an excessive reduction of the size of the fat composition chunks or chocolate chunks.

Preferably, the device further comprises a sieve for sieving the food preparation comprising fat composition chunks or chocolate chunks. Sieving allows for the fat composition chunks or chocolate chunks to maintain their irregular shape and size whilst separating larger fat composition chunks or chocolate chunks off from the food preparation. Preferably, the sieve comprises a perforated plate. This allows for a good balance between an efficient sieving and a stiffness sufficient to withstand a compression force the sieve is exposed to during the food preparation being guided through the sieve. The perforated plate is preferably made of a metal, particularly preferably steel, such to obtain a high stiffness and strength. The perforated plate preferably has round perforations. This allows to remove any fat composition chunks or chocolate chunks having an elongated shape from the preparation. A cross-section of a perforation of the sieve preferably ranges from 20 to 300 mm², preferably from 80 to 200 mm², more preferably from 110 to 175 mm². As such, larger-sized fat composition chunks or chocolate chunks that do not fit through the perforations can be separated off from the food preparation which results in a high-quality food preparation comprising fat composition chunks or chocolate chunks with a narrower size distribution. This is intended to mean that a perforation located near the mass point of the sieve has a smaller cross-section than a perforation located at an outer region of the sieve, i.e. comparatively far from the mass point of the sieve. It was found that this can contribute to a further enhancement of the irregularity of the shape of the fat composition chunks or chocolate chunks, hereby further improving the home-made appearance and excellent taste.

Preferably, the device further comprises a container for filling the food preparation comprising fat composition chunks or chocolate chunks. The container can be a storage-stable container and/or a ready-to-sell container. For example, the container can be a yoghurt cup and/or an ice cream packaging or a bulk container for further transport (e.g. a 400 to 1000 I stainless steel container).

The present invention also relates to a food preparation comprising fat composition chunks or chocolate chunks obtainable with the inventive method, particularly to a dairy product and/or a plant-based alternative thereof. The fat composition chunks or chocolate chunks comprised in the food preparation vary in size and shape in all three dimensions, and thus have a home-made appearance. This results in an exceptional sensation in taste and texture emerging during consumption of the food preparation, such as an excellent crunching and melting behavior of the fat composition chunks or chocolate chunks. Preferably, the fat composition chunks or chocolate chunks have a size in the largest extension of from 1 to 5 mm. The fat composition chunks or chocolate chunks are then both well perceivable and bite-sized, which can further enhance the enjoyment during consumption.

The present disclosure also relates to the use of the inventive food preparation comprising fat composition chunks or chocolate chunks in the food industry, preferably as ice cream, yoghurt, bakery product and/or milk shake.

According to a further aspect, the present invention also relates to a method for producing a food chunk preparation comprising food chunks having a fat content of at least 30 % (w/w), preferably chocolate chunks, wherein the method comprises the steps
(a) providing a liquid preparation at a temperature T1, wherein T1 is above the freezing point of the liquid preparation or at most 15°C, preferably at most 10°C, especially at most 5°C, under the freezing point of the food preparation in case half-frozen preparations,
(b) providing a molten food preparation with at least 30 % (w/w) fat content with a melting point of above T1 and adding the molten fat composition, preferably chocolate, to the liquid food preparation under stirring with a first rotation speed S1,

whereupon the chocolate solidifies at least partially,
(c1) stirring with a second rotation speed S2 higher than S1 to form chocolate chunks from the at least partially solidified chocolate, or
(c2) in case S1 is 4 rpm or above, preferably 10 rpm or above, especially 15 rpm or above, a second rotation speed S2 equal or higher than S1 to form chocolate chunks from the at least partially solidified chocolate,
(d) separating the food chunks from the liquid preparation; and
(e) completing the food chunk preparation.

Preferably, the method applies one or more of the embodiments according to the method for producing the food preparation as disclosed above.

According to a preferred embodiment, a step of cutting and/or sieving is performed before step (d), i.e. when the chunks are still in the liquid preparation and have not already been separated from the liquid preparation.

According to another aspect, the present invention also relates to a food chunk preparation obtainable with the method according to the present invention, wherein the food chunks preferably have a size in the largest extension of from 1 to 5, or from 1 to 8, or from 1 to 10 mm, especially for use in food and/or food industry.

In particular, the present invention relates to the following embodiments:
1. A method for producing a food preparation comprising food chunks having a fat content of at least 30 % (w/w), preferably chocolate chunks, the method comprising the steps
   (a) providing a food preparation at a temperature T1, wherein T1 is above the freezing point of the food preparation or at most 15°C, preferably at most 10°C, especially at most 5°C, under the freezing point of the food preparation in case half-frozen preparations,
   (b) providing a molten fat composition suitable for foodstuffs with a fat content of at least 30 % (w/w) with a melting point of above T1 and adding the molten fat composition to the food preparation under stirring with a first rotation speed S1,

   whereupon the fat composition solidifies at least partially,
   (c1) stirring with a second rotation speed S2 higher than S1 to form chunks from the at least partially solidified fat composition, or
   (c2) in case S1 is 4 rpm or above, preferably 10 rpm or above, especially 15 rpm or above, a second rotation speed S2 equal or higher than S1 to form chunks from the at least partially solidified fat composition, and
   (d) completing the food preparation comprising chunks of the fat composition.
2. A method according to embodiment 1, wherein the food preparation has a viscosity of from 1 to 100000 mPa.s at 20 °C, preferably from 100 to 50000 mPa.s, more preferably from 1000 to 20000 mPa.s.
3. The method according to embodiment 1 or 2, wherein the food preparation is a fruit preparation, a brown flavor preparation, such as a cocoa, coffee, or caramel preparation, a (flavoured) sugar syrup, a preparation stabilized with one or more food thickening agents such as starches, xanthan, guar gum, locust bean gum, gelatin, pectin, agar-agar, carrageenan, alginate, gellan gum; a dairy product and/or a plant-based alternative thereof, a savory preparation, a relish, a salsa, a pesto, a chutney, a tomato sauce, a sweet or savory dipping sauce, topping or spread, preferably further comprising inclusions such as pieces of fruits, cookies, dough, nuts, herbs, cut vegetables, cereals, seeds.
4. The method according to any of embodiments 1 to 3, wherein the food preparation comprises Stracciatella.
5. The method according to any of embodiments 1 to 4, wherein the food preparation is aseptic and/or wherein the method is performed aseptic.
6. The method according to any of embodiments 1 to 5, wherein the freezing point of the food preparation is below 0 °C, preferably below -5 °C, more preferably below -10 °C, yet more preferably below -15 °C.
7. The method according to any of embodiments 1 to 6, wherein T1 ranges from below the melting point of the fat composition or chocolate, preferably from -15 to 10 °C, more preferably from -10 to 5°C, more preferably from -10 to 3 °C, yet more preferably from -5 to 3 °C.
8. The method according to any of embodiments 1 to 7, wherein prior to step (a), the food preparation is kept below 15 °C, preferably below 5 °C, more preferably below 0 °C, yet more preferably below -5 °C, even more preferably of from -10 to 0 °C, particularly preferably at T1, preferably for at least 24 h, more preferably at least 48 h, particularly preferably at least 60 h.
9. The method according to any of embodiments 1 to 8, wherein the provided chocolate or fat composition is tempered.
10. The method according to any of embodiments 1 to 9, wherein the provided fat composition or chocolate and/or food preparation is pasteurized, preferably at a temperature of from at least 55 °C, especially from at least 60 °C, and/or preferably for 3 to 15 min; is treated with steam or dry heat; is treated with supercritical CO₂, is treated with high pressure processing, preferably at a temperature of from at least 0 °C, preferably from at least 25 °C, especially from 35 to 65 °C, and/or preferably for 1 to 10 min and/or preferably at 1000 to 10000 bar or more preferably at 5000 to 8000 bar; or wherein preservatives are added to the fat composition or chocolate and/or food preparation, preferably benzoic or sorbic acid and/or their corresponding salts; or combinations of these steps.
11. The method according to any of embodiments 1 to 10, wherein the fat composition or chocolate has a fat content of at least 50 wt%, preferably at least 60 wt%, more preferably at least 65 wt%, yet more preferably of from 50 to 95 wt%, even more preferably of from 60 to 95 wt%, particularly preferably of from 65 to 90 wt%, based on the total weight of the fat composition or chocolate.
12. The method according to any of embodiments 1 to 11, wherein the molten fat composition or chocolate is provided in step (b) at a temperature T2, wherein T2 is above the melting point of the fat composition or chocolate, and wherein T2 preferably ranges from 20 to 70 °C, more preferably from 25 to 50 °C, yet more preferably from 25 to 35 °C.
13. The method according to any of embodiments 1 to 12, wherein the molten fat composition or chocolate is stirred prior to its addition to the food preparation, preferably with a rotation speed of from 100 to 500 rpm prior to its addition to the food preparation, preferably from 200 to 400 rpm.
14. The method according to any of embodiments 1 to 13, wherein the molten fat composition or chocolate contains further inclusions, preferably edible seeds, especially nuts, legumes or cereals, such as hazelnuts, walnuts, pecans, peanuts, cashews, pistachios, Brazil nuts, macadamia, almonds, pine nuts, chia seeds, flaxseeds, linseed, sesame, buckwheat, and/or sunflower; dried or candied fruits, especially strawberries, dates, bananas, and/or citrus fruits; other special ingredients selected from cocoa nibs, cocoa beans, and/or coffee beans; and/or candy, especially caramels and/or popping candy.
15. The method according to any of embodiments 1 to 14, wherein the food preparation is stirred prior to the addition of the molten fat composition or chocolate, preferably with a rotation speed of from 5 to 20 rpm prior to the addition of the molten chocolate.
16. The method according to any of embodiments 1 to 15, wherein the food preparation is stirred prior to the addition of the molten fat composition or chocolate with a rotation speed of from 4 to 10 rpm.
17. The method according to any of embodiments 1 to 16, wherein the food preparation is stirred prior to the addition of the molten fat composition or chocolate for at least 2 min prior to the addition of the molten fat composition or chocolate, preferably at least 5 min, more preferably of from 2 to 15 min, yet more preferably from 5 to 10 min.
18. The method according to any of embodiments 1 to 17, wherein the molten fat composition or chocolate is added to the food preparation at a mass flow range of at least 100 kg/h per m² of available surface, preferably at least 300 kg/h per m² of available surface, especially at least 1000 kg/h per m²of available surface; or at a mass flow range of from 100 kg/h to 2000 kg/h per m² of available surface, preferably from 200 kg/h to 1000 kg/h, per m² of available surface can, especially from 300 to 500 kg/h, per m²of available surface.
19. The method according to any of embodiments 1 to 18, wherein the stirring in step (b) is performed for 2 to 20 min, preferably 5 to 15 min, more preferably 5 to 12 min.
20. The method according to any of embodiments 1 to 19, wherein the amount of molten fat composition or chocolate added to the food preparation ranges from 1 to 30 wt%, preferably from 3 to 20 wt%, more preferably from 5 to 15 wt%, with respect to the combined weight of the food preparation and the fat composition or chocolate.
21. The method according to any of embodiments 1 to 20, wherein the molten fat composition or chocolate is added onto a surface of the food preparation.
22. The method according to any of embodiments 1 to 21, wherein a surface of the food preparation has a size of from 0.3 to 3 m², preferably from 1.5 to 2.5 m², and/or a thickness of the formed chocolate layer is from 3 to 30 mm, more preferably from 5 to 15 mm.
23. The method according to any of embodiments 1 to 22, wherein an angle between a surface of the molten fat composition or chocolate and a direction of flow of a stream of the molten chocolate is from 70 to 110°, preferably from 80 to 100°.
24. The method according to any of embodiments 1 to 23, wherein the molten fat composition or chocolate is added to the food preparation via a tube.
25. The method according to embodiment 24, wherein the tube has a constant inner cross-section, preferably from 100 to 150 mm², more preferably from 115 to 135 mm², yet more preferably from 120 to 130 mm².
26. The method according to embodiment 24 or 25, wherein a distance between an outlet surface of the tube and a surface of the food preparation ranges from 1500 to 50 mm, preferably from 500 to 300 mm.
27. The method according to any of embodiments 24 to 26, wherein the tube comprises an insulating jacket or heat tracing.
28. The method according to any of embodiments 1 to 27, wherein S1 is 15 rpm or below, preferably 10 rpm or below, more preferably of from 9 to 1 rpm, yet more preferably from 6 to 2 rpm, particularly preferably from 4 to 2 rpm.
29. The method according to any of embodiments 1 to 28, wherein an increase of the temperature of the food preparation upon addition of the molten fat composition or chocolate is below 15 °C, more preferably below 12 °C, yet more preferably below 10 °C.
30. The method according to any of embodiments 1 to 29, wherein after addition of the molten fat composition or chocolate and prior to step (c), stirring with the first rotation speed continues for at least 2 min, preferably for at least 5 min, more preferably for at least 10 min, yet more preferably for 2 to 20 min, even more preferably for 5 to 15 min, particularly preferably for 8 to 12 min.
31. The method according to any of embodiments 1 to 30, wherein S2 is 15 rpm or above, preferably 20 rpm or above, more preferably of from 20 to 45 rpm, yet more preferably from 23 to 45 rpm, particularly preferably from 25 to 35 rpm.
32. The method according to any of embodiments 1 to 31, wherein S2 is at least 3 times higher than the first rotation speed S1, preferably at least 4 times, more preferably at least 5 times; preferably wherein S2 is 3 to 7 times higher than S1, more preferably 5 to 6 times.
33. The method according to any of embodiments 1 to 32, wherein step (c) is performed under vacuum, preferably at a pressure of 900 mbar or below, more preferably at 800 mbar or below, yet more preferably at 600 mbar or below, even more preferably at 400 mbar or below, particularly preferably at 200 mbar or below.
34. The method according to any of embodiments 1 to 33, wherein the stirring in step (c) is performed for 2 to 15 min, preferably 4 to 12 min, more preferably 5 to 10 min.
35. The method according to any of embodiments 1 to 34, wherein a stirrer comprising an inner stirrer and an outer stirrer are used for stirring in steps (b) and (c).
36. The method according to embodiment 35, wherein the inner stirrer and the outer stirrer are rotated in opposed directions.
37. The method according to embodiment 35 or 36, wherein, in step (b), the rotation speed of the inner stirrer is 30 rpm or below, more preferably 25 rpm or below, yet more preferably of from 10 to 25 rpm, even more preferably from 12 to 23 rpm, particularly preferably from 15 to 20 rpm; and/or the rotation speed of the outer stirrer is 12 rpm or below, more preferably 10 rpm or below, yet more preferably of from 8 to 1 rpm, even more preferably from 5 to 1 rpm, particularly preferably from 1 to 2 rpm.
38. The method according to any of embodiments 35 to 37, wherein in step (c), the rotation speed of the inner stirrer is 30 rpm or above, more preferably 40 rpm or above, yet more preferably of from 45 to 80 rpm, even more preferably from 50 to 75 rpm, particularly preferably from 60 to 70 rpm; and/or the rotation speed of the outer stirrer is 13 rpm or above, more preferably 15 rpm or above, yet more preferably of from 20 to 35 rpm, even more preferably from 21 to 30 rpm, particularly preferably from 22 to 26 rpm.
39. The method according to any of embodiments 1 to 38, wherein completing the food preparation comprising fat composition chunks or chocolate chunks comprises cutting, sieving and/or packaging, preferably cutting and subsequent sieving.
40. The method according to embodiment 39, wherein the cutting comprises cutting at least a part of the fat composition chunks or chocolate chunks with cutter.
41. The method according to embodiment 40, wherein the cutter comprises a rotor comprising a blade.
42. The method according to any of embodiments 39 to 41, wherein during cutting, the rotor is rotated with a speed of from 100 to 600 rpm, preferably from 200 to 550 rpm.
43. The method according to embodiment 41 or 42, wherein the blade is curved, preferably in a direction perpendicular to an axis of rotation of the rotor.
44. The method according to any of embodiments 41 to 43, wherein the rotor comprises 2 or more blades, preferably 4 or more blades, more preferably of from 4 to 15 blades, yet more preferably of from 6 to 10 blades.
45. The method according to any of embodiments 39 to 44, wherein the sieving comprises passing the food preparation comprising fat composition chunks or chocolate chunks through a sieve, wherein the sieve preferably comprises a perforated plate, preferably wherein the perforated plate is made of a metal, preferably steel.
46. The method according to embodiment 45, wherein the fat composition chunks contain edible inclusions, preferably edible seeds, especially nuts, legumes, cereals, hazelnuts, walnuts, pecans, peanuts, cashews, pistachios, Brazil nuts, macadamia, almonds, pine nuts, chia seeds, flaxseeds, linseed, sesame, buckwheat, and/or sunflower; dried or candied fruits or vegetables, especially strawberries, dates, bananas, and/or citrus fruits; special ingredients, selected from cocoa nibs, cocoa beans, and/or coffee beans; and/or marshmallows and/or candy, especially caramels and/or popping candy; baked- or half-baked inclusions such as cookie dough, cookies, crackers, brownies, fudge or combinations thereof; and/or wherein the fat composition contains vegetable fats, preferably shea butter, illipe butter, palm oil, soybean oil, rapeseed oil, coconut oil, cocoa butter, sunflower oil, and/or palm kernel oil and/or the corresponding hardened fats.
47. The method according to embodiment 45 or 46, wherein a cross-section of a perforation of the sieve ranges from 20 to 300 mm², preferably from 80 to 200 mm², more preferably from 110 to 175 mm².
48. The method according to any of embodiments 1 to 47, wherein completing the food preparation comprising fat composition chunks or chocolate chunks comprises packaging the food preparation comprising chocolate chunks into a container.
49. The method according to any of embodiments 1 to 48, wherein in the completed food preparation, the fat composition chunks or chocolate chunks have a size in the largest extension of from 1 to 5 mm, or from 1 to 8, or from 1 to 10 mm.
50. A device for producing a food preparation comprising fat composition chunks or chocolate chunks, preferably with the method according to any of embodiments 1 to 49, comprising
   a vessel for providing the food preparation,
   a tube for adding the molten fat composition or chocolate to the vessel, wherein the tube is configured to guide the molten fat composition or chocolate with a constant flow rate up to an outlet surface of the tube, and
   a stirrer arranged in the vessel, wherein the stirrer is configured to stir the food preparation before, during and after the addition of the molten fat composition or chocolate to the vessel.
51. The device according to embodiment 50, wherein the tube has a constant inner cross-section of from 100 to 150 mm², more preferably from 115 to 135 mm², yet more preferably from 120 to 130 mm².
52. The device according to embodiment 50 or 51, wherein the vessel comprises one inlet for adding the food preparation and the molten fat composition or chocolate to the vessel.
53. The device according to any of embodiments 50 to 52, wherein the vessel is a pasteurizer.
54. The device according to any of embodiments 50 to 53, wherein the working volume of the vessel has a ratio of diameter [or length] to height of from 1:2 to 2.5:1, preferably from 2:1 to 1.5:1.
55. The device according to any of embodiments 50 to 54, wherein an angle between a longitudinal axis of the tube and a longitudinal axis of the vessel is from 70 to 110°, preferably from 80 to 100°.
56. The device according to any of embodiments 50 to 55, wherein the tube comprises an insulating jacket or heat tracing.
57. The device according to any of embodiments 50 to 56, wherein a distance between the outlet surface of the tube and a maximum filling level of the vessel ranges from 1500 to 50 mm, preferably from 500 to 300 mm.
58. The device according to any of embodiments 50 to 57, further comprising a storage tank for storing the food preparation prior to its transfer to the vessel, wherein the storage tank is preferably temperature-controlled, more preferably coolable.
59. The device according to any of embodiments 50 to 58, wherein the stirrer comprises an inner stirrer and an outer stirrer.
60. The device according to embodiment 59, wherein the outer stirrer comprises an anchor stirrer and/or a scraper, and/or wherein the outer stirrer is configured to transport the at least partially solidified fat composition or chocolate towards the inner stirrer.
61. The device according to embodiment 59 or 60, wherein the outer stirrer extends from an axis of rotation to a mantle-near region of the vessel.
62. The device according to any of embodiments 59 to 61, wherein the inner stirrer comprises a screw.
63. The device according to any of embodiments 59 to 62, wherein the inner stirrer and the outer stirrer are configured to be rotatable in opposed directions.
64. The device according to any of embodiments 50 to 63, further comprising a cutter for cutting at least a part of the chocolate chunks, wherein the cutter is preferably an inline cutter.
65. The device according to embodiment 64, wherein the cutter comprises a rotor comprising a blade.
66. The device according to embodiment 65, wherein the blade is curved, preferably in a direction perpendicular to an axis of rotation of the rotor.
67. The device according to embodiment 65 or 66, wherein the rotor comprises 2 or more blades, preferably 4 or more blades, more preferably of from 4 to 12 blades, yet more preferably of from 6 to 10 blades.
68. The device according to any of embodiments 50 to 67, further comprising a sieve for sieving the food preparation comprising chocolate chunks, wherein the sieve preferably comprises a perforated plate, wherein the perforated plate is preferably made of a metal, preferably steel.
69. The device according to embodiment 68, wherein a cross-section of a perforation of the sieve preferably ranges from 20 to 300 mm², preferably from 80 to 200 mm², more preferably from 110 to 175 mm².
70. The device according to embodiment 68 or 69, wherein the fat composition chunks contain edible inclusions, preferably edible seeds, especially nuts, legumes, cereals, hazelnuts, walnuts, pecans, peanuts, cashews, pistachios, Brazil nuts, macadamia, almonds, pine nuts, chia seeds, flaxseeds, linseed, sesame, buckwheat, and/or sunflower; dried or candied fruits or vegetables, especially strawberries, dates, bananas, and/or citrus fruits; special ingredients, selected from cocoa nibs, cocoa beans, and/or coffee beans; etc.) and/or marshmallows and/or candy, especially caramels and/or popping candy; baked- or half-baked inclusions such as cookie dough, cookies, crackers, brownies, fudge or combinations thereof; and/or wherein the fat composition contains vegetable fats, preferably shea butter, illipe butter, palm oil, soybean oil, rapeseed oil, coconut oil, cocoa butter, sunflower oil and/or palm kernel oil and/or the corresponding hardened fats.
71. The device according to any of embodiments 50 to 70, further comprising a container for filling the food preparation comprising fat composition chunks or chocolate chunks.
72. Food preparation comprising fat composition chunks or chocolate chunks obtainable with the method according to any of embodiments 1 to 49, wherein the food preparation is preferably a fruit preparation, a brown flavor preparation, such as cocoa, coffee, or caramel preparation; a dairy product and/or a plant-based alternative thereof.
73. Food preparation according to embodiment 72, wherein the fat composition chunks or chocolate chunks have a size in the largest extension of from 1 to 5 mm.
74. Use of the food preparation comprising fat composition chunks or chocolate chunks according to embodiment 72 or 73 in the food industry, preferably as ice cream, yoghurt, bakery product and/or milk shake.
75. A method for producing a food chunk preparation comprising food chunks having a fat content of at least 30 % (w/w), preferably chocolate chunks, the method comprising the steps
   (a) providing a liquid preparation at a temperature T1, wherein T1 is above the freezing point of the liquid preparation or at most 15°C, preferably at most 10°C, especially at most 5°C, under the freezing point of the food preparation in case half-frozen preparations,
   (b) providing a molten food preparation with at least 30 % (w/w) fat content with a melting point of above T1 and adding the molten fat composition, preferably chocolate, to the liquid preparation under stirring with a first rotation speed S1,
   whereupon the chocolate solidifies at least partially,
   (c1) stirring with a second rotation speed S2 higher than S1 to form chocolate chunks from the at least partially solidified chocolate, or
   (c2) in case S1 is 4 rpm or above, preferably 10 rpm or above, especially 15 rpm or above, a second rotation speed S2 equal or higher than S1 to form chocolate chunks from the at least partially solidified chocolate,
   (d) separating the food chunks from the liquid preparation; and
   (e) completing the food chunk preparation.
76. The method according to embodiment 75, wherein one or more of the embodiments according to any one of embodiments 2 to 49 are performed.
77. The method according to any of embodiments 75 or 76, wherein cutting and/or sieving is performed before step (d).
78. Food chunk preparation obtainable with the method according to claim 75 to 77, wherein the food chunks, preferably have a size in the largest extension of from 1 to 5, or from 1 to 8, or from 1 to 10 mm, especially for use in food and/or food industry.

### Figures

The following figures are supposed to further illustrate the invention as described within this disclosure.
Fig. 1a-b display samples of chocolate chunks made from tempered chocolate.
Fig. 2a-c and Fig. 3a-c show finished Stracciatella preparations comprising chocolate chunks made from non-tempered chocolate and tempered chocolate.
Fig. 4a shows chocolate-almond chunks with a size of from 3 to 5 mm. Chocolate-almond chunks with a size of above 5 mm which were split off during the additional sieving step are displayed in Fig. 4b.
Fig. 5a shows a finished Stracciatella-almond preparation before cutting. Fig. 5b displays the finished preparation after cutting at 30% speed setting (approximately 315 rpm).
Fig. 6a-d show viscosities of four selected model preparations (coffee (Fig. 6a), pear (Fig. 6b), banana (Fig. 6c), stracciatella (Fig. 6d)) according to the present invention.

### Examples

The present invention is further described with the following examples whilst not being limited thereto.

### Production of Stracciatella preparations

Semi-finished Stracciatella preparations according to Table 1 (with the country of origin of all components being Austria) were taken from a regular production and placed for 3 days at -7 °C prior to further use. The pre-cooled preparations were then filled into buckets and transferred into a 200L batch pasteurizer (vacuum cooker/cooler, Terlet, The Netherlands). A pasteurized chocolate (pasteurized at 112 °C, 10 min.; appropriate pasteurizing conditions depend on the chocolate, mainly on the microbiological contamination of the raw chocolate) with the formulation according to Table 2 was used both in tempered and non-tempered condition. The tempering was performed in a Chocotemper Top 11 (ICB Tecnologie, Italy). The chocolate was kept at 55 °C to melt, then cooled to around 29 °C and subsequently heated to 32 °C. Stracciatella preparations comprising 88 wt% semi-finished Stracciatella preparation and 12 wt% chocolate were prepared.

**Table 1: Formulation of semi-finished Stracciatella preparation**

| **Component** | **Description** | **Amount (kg)** |
|---|---|---|
| Crystal sugar | White, crystal beet sugar | 73 |
| Water | | 37.82 |
| Agenabon 20.124 | Glucose-Fructose Syrup | 15 |
| Agenajel 20.383 | Modified waxy corn starch | 3.5 |
| Stracciatella Aroma | Natural Stracciatella flavoring | 0.45 |
| Xanthan Gum 60 Mesh type | Polysaccharide stabilizer | 0.2 |
| Citric Acid Monohydrate | Acidifier | 0.03 |
| Total | | 130.00 |

**Table 2: Formulation of chocolate**

| **Component** | **Supplier** | **Chemical name, description** | **Amount (kg)** |
|---|---|---|---|
| Dark chocolate | Cargill, Germany | Raw chocolate (formulation see below) | 17.00 |

| *Formulation of raw chocolate* | | | |
|---|---|---|---|
| Cocoa mass | | | 7.65 |
| Cocoa butter | | | 7.48 |
| Cane sugar | | | 1.70 |
| Emulsifier | | | 0.17 |

Before adding the chocolate to the semi-finished preparation, the chocolate was stirred with a rotation speed of 280 rpm (non-tempered chocolate) or 260 rpm (tempered chocolate) to prevent sedimentation of chocolate solids. Directly before addition of the liquid chocolate to the vessel, the chocolate was pumped in circle at the same flow rate as then for the addition into the vessel (as given in the last line of table 3). Prior to that, the chocolate was stored in a stirred container. Stirring speeds chosen to be appropriate for the given vessel were 280 and 240 rpm for not tempered and tempered chocolate, respectively. Thereafter, the chocolate was added onto the semi-finished preparation via a tube having a constant inner cross-section of 126.7 mm². The mass flow rate of the chocolate during addition was 120 kg/h (non-tempered chocolate) or 97.5 kg/h (tempered chocolate), resulting in a total time of chocolate addition of 8.5 min (non-tempered chocolate) or 10.5 min (tempered chocolate). The temperature of the chocolate during addition was about 30 to 31 °C (such that the chocolate was in molten state), resulting in a slight warm-up of the cooled preparation (initial temperature of 0 or 4 °C, and final temperature of 6 or 7 °C for tempered chocolate and non-tempered chocolate, respectively). The parameters used during chocolate addition are listed in Table 3.

**Table 3: Parameters used during addition of chocolate to semi-finished Stracciatella preparations**

| | | |
|---|---|---|
| | **Non-tempered chocolate** | **Tempered chocolate** |

| *Chocolate addition:* | | |
|---|---|---|
| Temperature of semi-finished preparation | initial: 4 °C, final: 7 °C | initial: 0 °C, final: 6 °C |
| Temperature of chocolate | initial: 31 °C, final: 31 °C | initial: 31 °C, final: 30 °C |
| Stirring speed prior to chocolate addition | 280 rpm | 260 rpm |
| Speed of chocolate pumping prior to addition to preparation | 120 kg/h | 97.5 kg/h |
| Time of chocolate addition to preparation | 8.5 min | 10.5 min |
| Mass flow rate of chocolate during addition to preparation | 120 kg/h | 97.5 kg/h |

During chocolate addition, the preparation was stirred slowly under ambient pressure. The used pasteurizer was equipped with two stirrers: an inner stirrer (screw) configured to submerge at least partially solidified chocolate into the preparation, and an outer stirrer configured to slowly agitate the preparation and to transport at least partially solidified chocolate towards the inner stirrer. The chocolate addition was performed with a speed of the outer stirrer of 3% (approximately 2 rpm) and a speed of the inner stirrer (screw stirrer) of -13% (approximately 17 rpm). Thereafter, to allow for the chocolate to solidify, this slow stirring speed was continued to be used for another 11.3 or 11.5 min (preparations comprising tempered chocolate and non-tempered chocolate, respectively). Upon said slow stirring, a thick chocolate layer can be formed and a certain level of solidification can already be reached before submersion by the inner stirrer. Moreover, the amount of fine chocolate flakes of below 1 mm can be significantly reduced. Such fine chocolate flakes are thin and almost paper-like, and not preferred due to organoleptic reasons (e.g. bad mouthfeel, no crunch).

Subsequently, the stirring speed was increased in order to break the chocolate and form chocolate chunks. To prevent gassing and the formation of air bubbles upon fast stirring, the pressure in the pasteurizer was reduced to 0.16 bar prior to increasing the stirring speed. During fast stirring, the speed of the outer stirrer was set to 22 or 24 rpm, the speed of the inner stirrer was set to -65 rpm, and the stirring time was 8.5 min or 6 min for the preparations comprising non-tempered chocolate and tempered chocolate, respectively. These stirring parameters can also be seen from Table 4.

**Table 4: Stirring parameters used during the production of Stracciatella preparations**

| | **Non-tempered chocolate** | | | **Tempered chocolate** | | |
|---|---|---|---|---|---|---|
| *Step* | *Duration (mm:ss)* | *Speed of outer stirrer (rpm)* | *Speed of inner stirrer (rpm)* | *Duration (mm:ss)* | *Speed of outer stirrer (rpm)* | *Speed of inner stirrer (rpm)* |
| Chocolate addition | 08:30 | 2 | 17 | 10:30 | 2 | 17 |
| Chocolate solidification | 11:30 | 2 | 17 | 11:20 | 2 | 17 |
| Breakage, formation of chocolate chunks | 08:30 | 22 | 65 | 06:00 | 24 | 65 |
| Manipulation time before filling | 10:00 | 0 | 0 | 10:00 | 0 | 0 |
| Filling | - | 8 | 32 | - | 8 | 32 |

To further reduce the size of the formed chocolate chunks, the preparation was subjected to cutting and sieving before being filled into a container. The manipulation time required to connect the pasteurizer comprising the preparation to the container was about 10 min, during which time the preparation was not stirred. Owing to the viscosity of the preparation, there was no settlement of chocolate chunks during that time.

Subsequently, the preparation was filled into the container with a pressure of 2 bar, hereby passing a rotor having eight radially arranged blades, and subsequently being guided through a sieve having round perforations with a cross-section of 176.7 mm². The rotor was operated at two different cutting speeds, namely at 20% (approximately 210 rpm) and 50% (approximately 525 rpm).

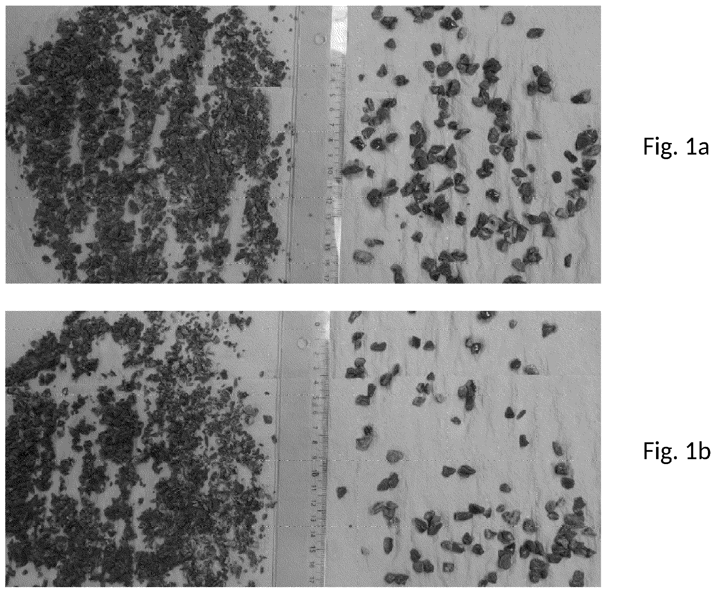

The resulting, finished Stracciatella preparations were analyzed with respect to the shape and size of the formed chocolate chunks. An additional sieving step with a wet sieving tower (Retsch, Germany) using water and grid sizes of 1 mm and 5 mm was performed for analyzing the size of chocolate chunks. Samples of chocolate chunks after this additional sieving step are displayed in Fig. 1a-b (Fig. 1a relates to the cutting speed of 20% and Fig. 1b to the cutting speed of 50%). On the left side of each of Fig. 1a-b, chocolate chunks with a size of from 1 to 5 mm are displayed. Chocolate chunks with a size of above 5 mm which were split off during the additional sieving step are displayed on the right side of each of Fig. 1a-b. The samples of Fig. 1a-b were produced using tempered chocolate; however, a similar result was obtained when using non-tempered-chocolate.

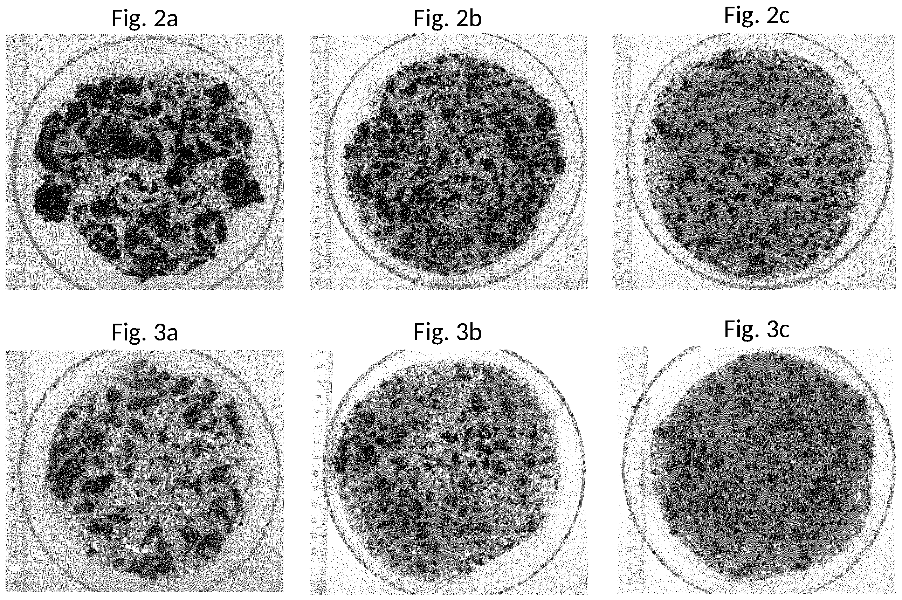

Finished Stracciatella preparations comprising chocolate chunks made from non-tempered chocolate and tempered chocolate are depicted in Fig. 2a-c and Fig. 3a-c, respectively. These images clearly show that the chocolate chunks produced with the inventive method have non-uniform, varying shapes and sizes, resulting in a home-made appearance and a different sensation in taste and texture compared to uniform chocolate flakes. As the chocolate chunks prepared according to the inventive method are generally larger in three-dimensions, they are better perceivable in upon consumption and need a longer time to melt, resulting in a more intense chocolate taste and a significant crunching.

Fig. 2a and 3a show finished preparations before cutting. Fig. 2b and 3b display finished preparations after cutting at 20% speed setting (approximately 210 rpm), and Fig. 2c and 3c show finished preparations after cutting at 50% speed setting (approximately 525 rpm). As can be seen, the higher the speed of the rotor during cutting, the smaller is the size of the chocolate chunks present in the final preparation.

The Stracciatella preparations comprising either non-tempered or tempered chocolate both showed a similar processing behavior, and chocolate chunks with similar size and shape were formed. As such, non-tempered and tempered chocolate were proven to be equally suitable for use in the inventive method.

### Production of a Stracciatella-almond preparation

A semi-finished Stracciatella preparation according to Table 1 (with the country of origin of all components being Austria) were taken from a regular production and placed for 3 days at -7 °C prior to further use. The pre-cooled preparation was then filled into buckets and transferred into a 200L batch pasteurizer (vacuum cooker/cooler, Terlet, The Netherlands). A pasteurized chocolate-almond mixture (pasteurized at 112 °C, 10 min.; appropriate pasteurizing conditions depend on the chocolate and the type of additional inclusion, mainly on the microbiological contamination of the raw chocolate and the additional inclusion such as almonds) with the formulation according to Table 2 was used in non-tempered condition. A Stracciatella-almond preparation comprising 88 wt% semi-finished Stracciatella preparation and 12 wt% chocolate-almond mixture was prepared.

**Table 1: Formulation of semi-finished Stracciatella preparation**

| **Component** | **Description** | **Amount (kg)** |
|---|---|---|
| Crystal sugar | White, crystal beet sugar | 73 |
| Water | | 37.82 |
| Agenabon 20.124 | Glucose-Fructose Syrup | 15 |
| Agenajel 20.383 | Modified waxy corn starch | 3.5 |
| Stracciatella Aroma | Natural Stracciatella flavoring | 0.45 |
| Xanthan Gum 60 Mesh type | Polysaccharide stabilizer | 0.2 |
| Citric Acid Monohydrate | Acidifier | 0.03 |
| Total | | 130.00 |

**Table 2: Formulation of the chocolate-nut mixture**

| **Component** | **Supplier** | **Chemical name, description** | **Amount (kg)** |
|---|---|---|---|
| Chopped almonds | Imgro Nahrungs- und Genussmittelgroßhandel und Import Gesellschaft m.b.H., Vienna, Austria | Chopped almonds, piece size 2-4 mm | 3.00 |
| Dark chocolate | Cargill, Germany | Raw chocolate (formulation see below) | 14.00 |

| *Formulation of raw chocolate* | | | |
|---|---|---|---|
| Cocoa mass | | | 6.30 |
| Cocoa butter | | | 6.16 |
| Cane sugar | | | 1.40 |
| Emulsifier | | | 0.14 |

Before adding the chocolate-nut mixture to the semi-finished preparation, the mixture was stirred with a rotation speed of 220 rpm to prevent sedimentation of chocolate solids and separation of the chopped almonds. Directly before addition of the liquid chocolate-almond mixture to the vessel, the mixture was pumped in circle at the same flow rate as then for the addition into the vessel (as given in the last line of table 3). Prior to that, the mixture was stored in a stirred container. The stirring speed chosen to be appropriate for the given vessel was 220 rpm. Thereafter, the chocolate was added onto the semi-finished preparation via a tube having a constant inner cross-section of 126.7 mm². The mass flow rate of the chocolate-almond mixture during addition was 110 kg/h, resulting in a total time of addition of 9.3 min. The temperature of the chocolate during addition was about 30 to 31 °C (such that the chocolate was in molten state), resulting in a slight warm-up of the cooled preparation (initial temperature of 0 °C, and final temperature of 6 °C). The parameters used during the addition of the chocolate-almond mixture are listed in Table 3.

**Table 3: Parameters used during addition of the chocolate-almond mixture to the semi-finished Stracciatella preparation**

| *Chocolate-almond mixture addition:* | |
|---|---|
| Temperature of semi-finished preparation | initial: 0 °C, final: 6 °C |
| Temperature of chocolate-almond mixture | initial: 31 °C, final: 31 °C |
| Stirring speed prior to chocolate-almond mixture addition | 220 rpm |
| Speed of chocolate-almond mixture pumping prior to addition to preparation | 110 kg/h |
| Time of chocolate-almond mixture addition to preparation | 9.3 min |
| Mass flow rate of chocolate-almond mixture during addition to preparation | 110 kg/h |

During addition of the chocolate-almond mixture, the preparation was stirred slowly under ambient pressure. The used pasteurizer was equipped with two stirrers: an inner stirrer (screw) configured to submerge the at least partially solidified chocolate-almond mixture into the preparation, and an outer stirrer configured to slowly agitate the preparation and to transport the at least partially solidified chocolate-almond mixture towards the inner stirrer. The chocolate mixture addition was performed with a speed of the outer stirrer of 3% (approximately 2 rpm) and a speed of the inner stirrer (screw stirrer) of -13% (approximately 17 rpm). Thereafter, to allow for the chocolate to solidify, this slow stirring speed was continued to be used for another 11.5 min. Upon said slow stirring, a thick layer of the chocolate-almond mixture can be formed and a certain level of solidification can already be reached before submersion by the inner stirrer. Moreover, the amount of fine chocolate flakes of below 1 mm can be significantly reduced. Such fine chocolate flakes are thin and almost paper-like, and not preferred due to organoleptic reasons (e.g. bad mouthfeel, no crunch).

Subsequently, the stirring speed was increased in order to break the chocolate and form chocolate chunks comprising almond pieces. To prevent gassing and the formation of air bubbles upon fast stirring, the pressure in the pasteurizer was reduced to 0.16 bar prior to increasing the stirring speed. During fast stirring, the speed of the outer stirrer was set to 22 rpm, the speed of the inner stirrer was set to 65 rpm, and the stirring time was 8.5 min. These stirring parameters can also be seen from Table 4.

**Table 4: Stirring parameters used during the production of the Stracciatella-almond preparation**

| *Step* | *Duration (mm:ss)* | *Speed of outer stirrer (rpm)* | *Speed of inner stirrer (rpm)* |
|---|---|---|---|
| Chocolate addition | 09:18 | 2 | 17 |
| Chocolate solidification | 11:30 | 2 | 17 |
| Breakage, formation of chocolate chunks | 08:30 | 22 | 65 |
| Manipulation time before filling | 10:00 | 0 | 0 |
| Filling (2 bar pressure in headspace) | - | 8 | 32 |

To further reduce the size of the formed chocolate-almond chunks, the preparation was subjected to cutting and sieving before being filled into a container. The manipulation time required to connect the pasteurizer comprising the preparation to the container was about 10 min, during which time the preparation was not stirred. Owing to the viscosity of the preparation, there was no settlement of chocolate-almond chunks during that time.

Subsequently, the preparation was filled into the container with a pressure of 2 bar, hereby passing a rotor having eight radially arranged blades, and subsequently being guided through a sieve having round perforations with a cross-section of 176.7 mm². The rotor was operated at a cutting speed of 30% (approximately 315 rpm).

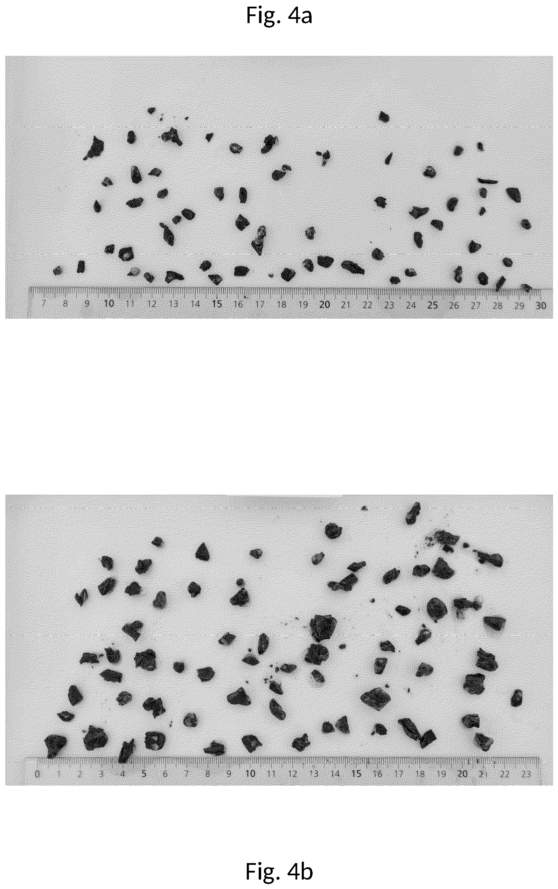

The resulting, finished Stracciatella-almond preparation was analyzed with respect to the shape and size of the formed chocolate chunks. An additional sieving step with a vibrated sieve shaker equipment (AS 200, Retsch GmbH, Retsch-Allee 1-5, 42781 Haan, Germany) using water and grid sizes of 3 mm and 5 mm was performed for analyzing the size of chocolate-almond chunks. Samples of chocolate-almond chunks after this additional sieving step are displayed in Fig. 4a-b. In Fig. 4a chocolate-almond chunks with a size of from 3 to 5 mm are displayed. Chocolate-almond chunks with a size of above 5 mm which were split off during the additional sieving step are displayed in Fig. 4b.

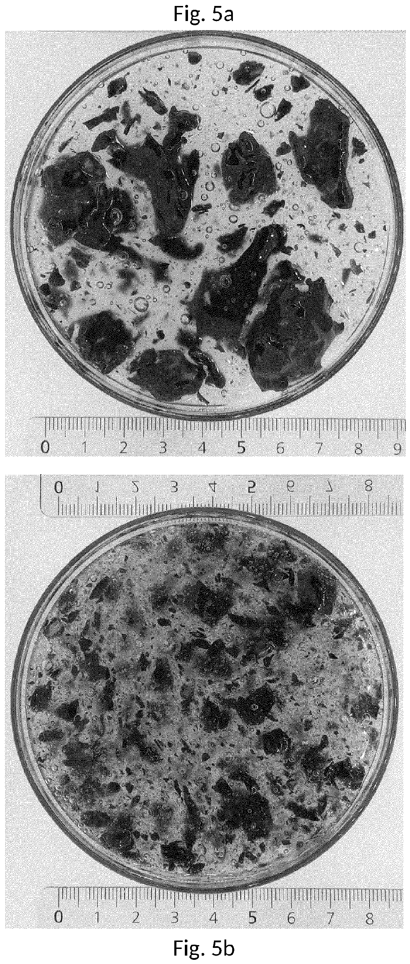

Finished Stracciatella preparations comprising chocolate-almond chunks made from non-tempered chocolate are depicted in Fig. 5a-b. These images clearly show that the chocolate-almond chunks produced with the inventive method have non-uniform, varying shapes and sizes, resulting in a home-made appearance and a different sensation in taste and texture compared to uniform chocolate flakes. As the chocolate-almond chunks prepared according to the inventive method are generally larger in three-dimensions, they are better perceivable in upon consumption and need a longer time to melt, resulting in a more intense chocolate taste and a significant crunching also supported by the additional almond inclusion. Moreover, the almond pieces are partially to fully covered with chocolate so that they are still visually recognizable for the consumer while providing additional crunch.

Fig. 5a shows the finished preparation before cutting. Fig. 5b displays the finished preparation after cutting at 30% speed setting (approximately 315 rpm).

### Viscosity measurements

Four selected model preparations (coffee, pear, banana, and stracciatella) according to the present invention were investigated with respect to their viscosities and shear rates at 0°C and 20°C also with respect to dimensions and set-ups of the stirring apparatuses. Viscosities were determined as disclosed above in the Modular Compact Rheometer Type MCR 302 (Anton Paar GmbH, Graz, Austria), which is temperature controlled by a Haake K20 and DC5 device (Haake, Karlsruhe, Germany). A plate-plate measuring system (PP50) is used and the data is collected and analyzed with the RheoCompass software. The temperature can be widely adjusted and was set to 0°C and 20 °C as standard for good comparability. The measurement was started after 2 min of temperature constancy.

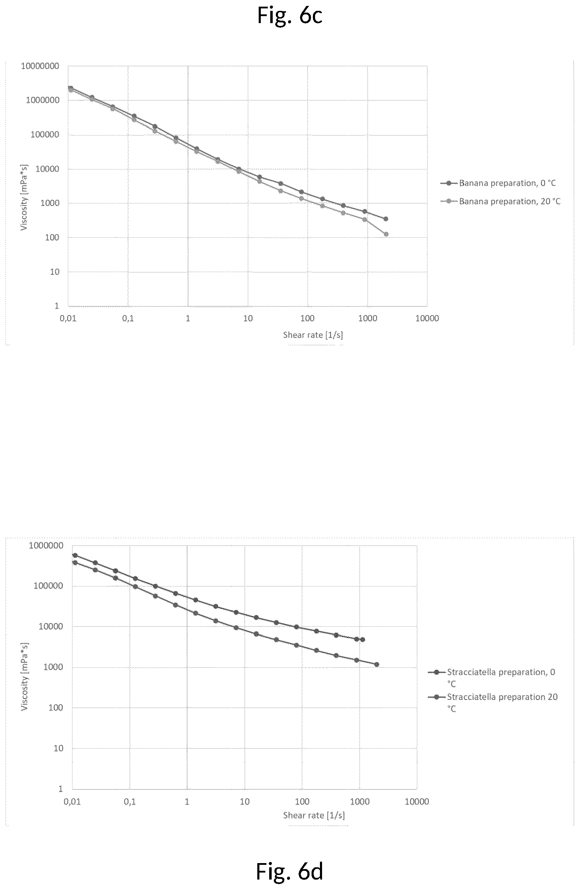

The results are disclosed in Fig. 6. and in the following tables and show viscosities of four selected model preparations (coffee (Fig. 6a), pear (Fig. 6b), banana (Fig. 6c), stracciatella (Fig. 6d)) according to the present invention.

| **Coffee preparation, 0 °C** | | | **Coffee preparation, 20 °C** | | |
|---|---|---|---|---|---|
| | Shear rate [1/s] | Viscosity [mPa·s] | | Shear rate [1/s] | Viscosity [mPa·s] |
| 1 | 0,001 | 6,41E+05 | 1 | 0,000999 | 3,58E+05 |
| 2 | 0,00224 | 5,00E+05 | 2 | 0,00224 | 3,65E+05 |
| 3 | 0,00501 | 3,17E+05 | 3 | 0,00501 | 2,38E+05 |
| 4 | 0,0112 | 1,94E+05 | 4 | 0,0112 | 1,43E+05 |
| 5 | 0,0251 | 1,18E+05 | 5 | 0,0251 | 85143 |
| 6 | 0,0562 | 72521 | 6 | 0,0562 | 51642 |
| 7 | 0,126 | 45413 | 7 | 0,126 | 32158 |
| 8 | 0,282 | 29038 | 8 | 0,282 | 20550 |
| 9 | 0,631 | 18860 | 9 | 0,631 | 13438 |
| 10 | 1,41 | 12440 | 10 | 1,41 | 8946,3 |
| 11 | 3,16 | 8327 | 11 | 3,16 | 6047,5 |
| 12 | 7,08 | 5600,1 | 12 | 7,08 | 4130,9 |
| 13 | 15,8 | 3717,2 | 13 | 15,8 | 2816,5 |
| 14 | 35,5 | 2413,2 | 14 | 35,5 | 1881,7 |
| 15 | 79,4 | 1539,4 | 15 | 79,4 | 1225,8 |
| 16 | 178 | 992,62 | 16 | 178 | 784,85 |
| 17 | 398 | 649,78 | 17 | 398 | 512,09 |
| 18 | 895 | 439,65 | 18 | 897 | 347,24 |
| 19 | 2,04E+03 | 218,63 | 19 | 2,05E+03 | 132,62 |

| **Pear preparation, 0 °C** | | | **Pear preparation, 20 °C** | | |
|---|---|---|---|---|---|
| Shear rate [1/s] | | Viscosity [mPa·s] | Shear rate [1/s] | | Viscosity [mPa·s] |
| 1 | 0,001 | 2,40E+06 | 1 | 0,001 | 2,30E+06 |
| 2 | 0,00224 | 2,18E+06 | 2 | 0,00224 | 1,69E+06 |
| 3 | 0,00501 | 1,44E+06 | 3 | 0,00501 | 1,00E+06 |
| 4 | 0,0112 | 8,70E+05 | 4 | 0,0112 | 5,36E+05 |
| 5 | 0,0251 | 5,01E+05 | 5 | 0,0251 | 3,01E+05 |
| 6 | 0,0562 | 2,86E+05 | 6 | 0,0562 | 1,72E+05 |
| 7 | 0,126 | 1,65E+05 | 7 | 0,126 | 99333 |
| 8 | 0,282 | 97124 | 8 | 0,282 | 58435 |
| 9 | 0,631 | 57925 | 9 | 0,631 | 34879 |
| 10 | 1,41 | 34896 | 10 | 1,41 | 21112 |
| 11 | 3,16 | 21148 | 11 | 3,16 | 12935 |
| 12 | 7,08 | 12834 | 12 | 7,08 | 7993,5 |
| 13 | 15,8 | 7800,3 | 13 | 15,8 | 4939,4 |
| 14 | 35,5 | 4709,9 | 14 | 35,5 | 3046,5 |
| 15 | 79,4 | 2861,1 | 15 | 79,4 | 1870,6 |
| 16 | 178 | 1749,9 | 16 | 178 | 1146,9 |
| 17 | 398 | 1090,9 | 17 | 398 | 707,23 |
| 18 | 892 | 693,27 | 18 | 893 | 443,9 |
| 19 | 2,02E+03 | 418,43 | 19 | 2,04E+03 | 222,88 |

| **Banana preparation, 0 °C** | | | **Banana preparation, 20 °C** | | |
|---|---|---|---|---|---|
| Shear rate [1/s] | | Viscosity [mPa·s] | Shear rate [1/s] | | Viscosity [mPa·s] |
| 1 | 0,001 | 2,14E+07 | 1 | 0,001 | 1,83E+07 |
| 2 | 0,00224 | 9,47E+06 | 2 | 0,00225 | 8,28E+06 |
| 3 | 0,00501 | 4,58E+06 | 3 | 0,00501 | 4,03E+06 |
| 4 | 0,0112 | 2,26E+06 | 4 | 0,0112 | 1,98E+06 |
| 5 | 0,0251 | 1,21E+06 | 5 | 0,0251 | 1,06E+06 |
| 6 | 0,0562 | 6,43E+05 | 6 | 0,0562 | 5,60E+05 |
| 7 | 0,126 | 3,47E+05 | 7 | 0,126 | 2,69E+05 |
| 8 | 0,282 | 1,73E+05 | 8 | 0,282 | 1,27E+05 |
| 9 | 0,631 | 81984 | 9 | 0,631 | 63779 |
| 10 | 1,41 | 39083 | 10 | 1,41 | 32028 |
| 11 | 3,16 | 19050 | 11 | 3,16 | 16676 |
| 12 | 7,08 | 10062 | 12 | 7,08 | 8436,7 |
| 13 | 15,8 | 5870,6 | 13 | 15,8 | 4272,8 |
| 14 | 35,5 | 3768,5 | 14 | 35,5 | 2288,5 |
| 15 | 79,4 | 2129,2 | 15 | 79,4 | 1356,9 |

| | | | | | |
|---|---|---|---|---|---|
| 16 | 178 | 1323,3 | 16 | 178 | 841,25 |
| 17 | 398 | 845,65 | 17 | 398 | 522,65 |
| 18 | 892 | 576,87 | 18 | 897 | 330,82 |
| 19 | 2,03E+03 | 347,67 | 19 | 2,05E+03 | 123,9 |

| **Stracciatella preparation, 0 °C** | | | **Stracciatella preparation 20 °C** | | |
|---|---|---|---|---|---|
| Shear rate [1/s] | | Viscosity [mPa·s] | Shear rate [1/s] | | Viscosity [mPa·s] |
| 1 | 0,001 | 9,36E+05 | 1 | 0,001 | 8,09E+05 |
| 2 | 0,00224 | 1,02E+06 | 2 | 0,00224 | 7,38E+05 |
| 3 | 0,00501 | 8,20E+05 | 3 | 0,00501 | 5,53E+05 |
| 4 | 0,0112 | 5,73E+05 | 4 | 0,0112 | 3,80E+05 |
| 5 | 0,0251 | 3,75E+05 | 5 | 0,0251 | 2,50E+05 |
| 6 | 0,0562 | 2,39E+05 | 6 | 0,0562 | 1,57E+05 |
| 7 | 0,126 | 1,53E+05 | 7 | 0,126 | 95438 |
| 8 | 0,282 | 99729 | 8 | 0,282 | 57006 |
| 9 | 0,631 | 66137 | 9 | 0,631 | 34024 |
| 10 | 1,41 | 44811 | 10 | 1,41 | 21178 |
| 11 | 3,16 | 31299 | 11 | 3,16 | 13831 |
| 12 | 7,08 | 22440 | 12 | 7,08 | 9421,3 |
| 13 | 15,8 | 16599 | 13 | 15,8 | 6624,1 |
| 14 | 35,5 | 12576 | 14 | 35,5 | 4781,6 |
| 15 | 79,4 | 9753,3 | 15 | 79,4 | 3530,2 |
| 16 | 178 | 7716,8 | 16 | 178 | 2602,3 |
| 17 | 397 | 6225,8 | 17 | 398 | 1949,1 |
| 18 | 888 | 4971 | 18 | 891 | 1507,2 |
| 19 | 1,12E+03 | 4843,4 | 19 | 2,00E+03 | 1187,6 |

## Claims

1. A method for producing a food preparation comprising food chunks having a fat content of at least 30 % (w/w), preferably chocolate chunks, the method comprising the steps
(a) providing a food preparation at a temperature T1, wherein T1 is above the freezing point of the food preparation or at most 15°C, preferably at most 10°C, especially at most 5°C, under the freezing point of the food preparation in case half-frozen preparations,
(b) providing a molten fat composition suitable for foodstuffs with a fat content of at least 30 % (w/w) with a melting point of above T1 and adding the molten fat composition to the food preparation under stirring with a first rotation speed S1,
whereupon the fat composition solidifies at least partially,
(c1) stirring with a second rotation speed S2 higher than S1 to form chunks from the at least partially solidified fat composition, or
(c2) in case S1 is 4 rpm or above, preferably 10 rpm or above, especially 15 rpm or above, a second rotation speed S2 equal or higher than S1 to form chunks from the at least partially solidified fat composition, and
(d) completing the food preparation comprising chunks of the fat composition.

2. The method according to claim 1, wherein S2 is at least 1.5 times higher than S1 and/or wherein S1 is 15 rpm or below.

3. The method according to claim 1 or 2, wherein the molten fat composition or chocolate is added to the food preparation at a mass flow range of at least 100 kg/h per m² of available surface, preferably at least 300 kg/h per m² of available surface, especially at least 1000 kg/h per m²of available surface; or at a mass flow range of from 100 kg/h to 2000 kg/h per m² of available surface, preferably from 200 kg/h to 1000 kg/h, per m² of available surface can, especially from 300 to 500 kg/h, per m²of available surface.

4. The method according to any of claims 1 to 3, wherein the molten fat composition or chocolate is added to the food preparation via a tube, wherein the tube has a constant inner cross-section.

5. The method according to any of claims 1 to 4, wherein completing the food preparation comprising fat composition chunks or chocolate chunks comprises cutting and/or sieving.

6. The method according to claim 5, wherein the sieving comprises passing the food preparation comprising fat composition chunks or chocolate chunks through a sieve, wherein the sieve comprises a perforated plate.

7. The method according to claim 6, wherein the fat composition chunks contain edible inclusions, preferably edible seeds, especially nuts, legumes, cereals, hazelnuts, walnuts, pecans, peanuts, cashews, pistachios, Brazil nuts, macadamia, almonds, pine nuts, chia seeds, flaxseeds, linseed, sesame, buckwheat, and/or sunflower; dried or candied fruits or vegetables, especially strawberries, dates, bananas, and/or citrus fruits; special ingredients, selected from cocoa nibs, cocoa beans, and/or coffee beans; and/or marshmallows and/or candy, especially caramels and/or popping candy; baked- or half-baked inclusions such as cookie dough, cookies, crackers, brownies, fudge or combinations thereof; and/or wherein the fat composition contains vegetable fats, preferably shea butter, illipe butter, palm oil, soybean oil, rapeseed oil, coconut oil, cocoa butter, sunflower oil, and/or palm kernel oil and/or the corresponding hardened fats.

8. A device for producing a food preparation comprising fat composition chunks or chocolate chunks, preferably with the method according to any of claims 1 to 7, comprising
a vessel for providing the food preparation,
a tube for adding the molten fat composition or chocolate to the vessel, wherein the tube is configured to guide the molten fat composition or chocolate with a constant flow rate up to an outlet surface of the tube, and
a stirrer arranged in the vessel, wherein the stirrer is configured to stir the food preparation before, during and after the addition of the molten fat composition or chocolate to the vessel.

9. The device according to claim 8, wherein the vessel comprises one inlet for adding the food preparation and the molten fat composition or chocolate to the vessel.

10. The device according to claim 8 or 9, wherein a distance between the outlet surface of the tube and a maximum filling level of the vessel ranges from 50 to 1500 mm.

11. The device according to any of claims 8 to 10, wherein the stirrer comprises an inner stirrer and an outer stirrer, preferably wherein the outer stirrer is configured to transport the at least partially solidified fat composition or chocolate towards the inner stirrer and/or wherein the inner stirrer and the outer stirrer are configured to be rotatable in opposed directions.

12. Food preparation comprising fat composition or chocolate chunks obtainable with the method according to any of claims 1 to 7, wherein the fat composition chunks or chocolate chunks have a preferred size in the largest extension of from 1 to 10 mm, preferably 1 to 8 mm, especially 1 to 5 mm, and wherein the food preparation is preferably a dairy product and/or a plant-based alternative thereof.

13. A method for producing a food chunk preparation comprising food chunks having a fat content of at least 30 % (w/w), preferably chocolate chunks, the method comprising the steps
(a) providing a liquid preparation at a temperature T1, wherein T1 is above the freezing point of the liquid preparation or at most 15°C, preferably at most 10°C, especially at most 5°C, under the freezing point of the food preparation in case half-frozen preparations,
(b) providing a molten food preparation with at least 30 % (w/w) fat content with a melting point of above T1 and adding the molten fat composition or chocolate to the food preparation under stirring with a first rotation speed S1,
whereupon the fat composition or chocolate solidifies at least partially,
(c1) stirring with a second rotation speed S2 higher than S1 to form fat composition chunks or chocolate chunks from the at least partially solidified fat composition or chocolate, or
(c2) in case S1 is 4 rpm or above, preferably 10 rpm or above, especially 15 rpm or above, a second rotation speed S2 equal or higher than S1 to form fat composition chunks or chocolate chunks from the at least partially solidified chocolate,
(d) separating the food chunks from the liquid preparation; and
(e) completing the food chunk preparation.

14. The method according to claim 13, wherein one or more of the embodiments according to any one of claims 2 to 7 are performed, preferably wherein cutting and/or sieving is performed before step (d).

15. Food chunk preparation obtainable with the method according to claim 13 or 14, wherein the food chunks, preferably have a size in the largest extension of from 1 to 5 mm, from 1 to 8 mm, or from 1 to 10 mm.
